# EUROPEAN PATENT APPLICATION

(11) **EP 4 664 814 A1**
(43) Date of publication of application: **17.12.2025**
(21) Application number: 24773945.1
(22) Date of filing: 11.03.2024
(51) Int. Cl.: H04L 5/00

(54) **COMMUNICATION METHOD AND RELATED APPARATUS**

(30) Priority: 17.03.2023 CN 202310309625; 05.09.2023 CN 202311140366
(71) Applicant: Huawei Technologies Co., Ltd., Shenzhen, Guangdong 518129 (CN)
(72) Inventor: SUN, Fei, Shenzhen, Guangdong 518129 (CN)
(74) Representative: Maiwald GmbH
(86) International application number: PCT/CN2024/080975
(87) International publication number: WO 2024/193378

(57) **Abstract**

A communication method and a related apparatus are provided. The method includes: A first donor node generates first information, where the first information indicates a slice corresponding to a first backhaul radio link control (radio link control, RLC) channel, and the first backhaul RLC channel is a backhaul RLC channel corresponding to a first integrated access and backhaul (integrated access and backhaul, IAB) node. The first donor node sends the first information to the first IAB node. In this method, the first information indicates the slice corresponding to the first backhaul RLC channel corresponding to the first IAB node, so that slice resource isolation between a transmit end and a receive end that correspond to the first backhaul RLC channel can be implemented, thereby implementing end-to-end slice resource isolation in an IAB architecture, and ensuring prioritized and reliable communication of a high-priority service.

## Description

This application claims priorities to Chinese Patent Application No. 202310309625.5, filed with the China National Intellectual Property Administration on March 17, 2023 and entitled "COMMUNICATION METHOD AND RELATED APPARATUS", and to Chinese Patent Application No. 202311140366.4, filed with the China National Intellectual Property Administration on September 5, 2023 and entitled "COMMUNICATION METHOD AND RELATED APPARATUS", both of which are incorporated herein by reference in their entireties.

### TECHNICAL FIELD

This application relates to the field of communication technologies, and in particular, to a communication method and a related apparatus.

### BACKGROUND

Compared with a 4th generation mobile communication system, a 5th generation (5th generation, 5G) mobile communication system and a future mobile communication system raise stricter requirements on performance indicators of networks. For example, compared with 4G, 5G achieves a 1000-fold increase in capacity, and has requirements for wider coverage, ultra-high reliability, low latency, and the like. In an aspect, considering that high-frequency carrier frequency resources are abundant, in a hotspot area, to meet an ultra-high capacity requirement of 5G, high-frequency small cell networking becomes increasingly popular. High frequency carriers have a poor propagation feature, are severely attenuated by obstacles, and have small coverage. Therefore, a large quantity of small cells need to be densely deployed. However, it is costly to provide optical fiber backhaul for the large quantity of densely deployed small cells, and construction is difficult. Therefore, a cost-efficient and convenient backhaul solution is required. In another aspect, in consideration of a requirement for wide coverage, optical fiber deployment is difficult and costly for providing network coverage in some remote areas. Therefore, a flexible and convenient access and backhaul solution also needs to be designed. An integrated access and backhaul (integrated access and backhaul, IAB) technology provides an idea to resolve the foregoing two problems. An access link (access link) and a backhaul link (backhaul link, BL) thereof each use a wireless transmission solution, to reduce deployment of optical fibers.

In an IAB network, a relay node RN (relay node) or an IAB node (IAB node) may provide a wireless access service and service data forwarding for a user equipment (UE, user equipment). Service data of the UE is transmitted by the IAB node to an IAB donor (IAB donor) over a wireless backhaul link. The IAB donor may also be referred to as a donor node (donor node) or a donor base station (donor gNodeB, DgNB). The IAB node includes a mobile termination (mobile termination, MT) part and a distributed unit (distributed unit, DU) part. When facing a parent node of the IAB node, the IAB node may serve as a terminal device, that is, a role of an MT. When facing a child node (the child node may be another IAB node or a UE) of the IAB node, the IAB node is considered as a network device, that is, a role of a DU. The donor base station (DgNB) may be an access network element having complete base station functions, or may be an access network element in a form in which a central unit (central unit, CU) and a distributed unit (distributed unit, DU) are separated. The donor base station is connected to a core network (for example, connected to a 5G core network) element serving the UE, and provides a wireless backhaul function for the IAB node.

As a mandatory feature of an end-to-end protocol data unit (protocol data unit, PDU) session of the UE, slicing cannot implement end-to-end slice resource isolation in an IAB architecture. As a result, prioritized and reliable communication of a high-priority service cannot be ensured.

### SUMMARY

Embodiments of this application provide a communication method and a related apparatus, to implement end-to-end slice resource isolation in an IAB architecture, thereby ensuring prioritized and reliable communication of a high-priority service.

According to a first aspect, an embodiment of this application provides a communication method. The method may be performed by a communication apparatus. The communication apparatus may be a device, or may be a chip (system) or a circuit used in the device. This is not limited in this application. The method includes:
A first donor node generates first information, where the first information indicates a slice corresponding to a first backhaul radio link control RLC channel, and the first backhaul RLC channel is a backhaul RLC channel corresponding to a first integrated access and backhaul IAB node.

The first donor node sends the first information to the first IAB node.

In this embodiment of this application, the communication method is provided. The first donor node generates the first information, and sends the first information to the first integrated access and backhaul (integrated access and backhaul, IAB) node. The first information indicates the slice corresponding to the first backhaul radio link control (radio link control, RLC) channel corresponding to the first IAB node. It may be understood that, after receiving the first information, the first IAB node establishes the first backhaul RLC channel based on the slice indicated by the first information. Because a resource used by the first backhaul RLC channel is a slice resource indicated by the first information, slice resource isolation between a transmit end and a receive end that correspond to the first backhaul RLC channel can be implemented, thereby implementing end-to-end slice resource isolation in an IAB architecture. Due to end-to-end slice resource isolation, a backhaul RLC channel corresponding to a high-priority service may use a specific slice resource, to ensure prioritized and reliable communication of the high-priority service.

**In a possible implementation,** the first information includes one or more slice identifiers corresponding to the first backhaul RLC channel.

In this implementation of this application, a possible specific implementation of the first information is provided. Specifically, the first information includes the one or more slice identifiers corresponding to the first backhaul RLC channel, and the first information may indicate, by using the slice identifier included in the first information, the slice corresponding to the first backhaul RLC channel, to implement slice resource isolation between the transmit end and the receive end that correspond to the first backhaul RLC channel.

**In a possible implementation,** the first information further indicates that a resource used by the first backhaul RLC channel is a reserved resource, the reserved resource includes a resource reserved for at least one backhaul RLC channel, and the at least one backhaul RLC channel includes the first backhaul RLC channel.

In this implementation of this application, a possible specific implementation of the first information is provided. Specifically, the first information further indicates that the resource used by the first backhaul RLC channel is the reserved resource, where the reserved resource is a proportion of resources reserved on an air interface for the first backhaul RLC channel, and the proportion of reserved resources may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application. In this embodiment of this application, the first information indicates that the first backhaul RLC channel uses the reserved resource, to implement slice resource isolation between the transmit end and the receive end that correspond to the first backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the first backhaul RLC channel, or may be a reserved resource that does not carry a slice identifier. This is not limited in this embodiment of this application.

In a possible implementation, before the first donor node sends the first information to the first IAB node, the method further includes:
The first donor node receives second information from a first node, where the second information indicates that a resource used by a first protocol data unit PDU session is a reserved resource, and the first PDU session includes a PDU session corresponding to the first donor node.

In this implementation of this application, a possible specific implementation of slice-based IAB backhaul configuration is provided. Specifically, the first donor node receives the second information from the first node, where the second information indicates that the resource used by the protocol data unit (protocol data unit, PDU) session corresponding to the first donor node is the reserved resource. It may be understood that, in a scenario in which the first node initiates a PDU session resource setup request to the first donor node, after receiving the second information, the first donor node establishes the PDU session based on the reserved resource indicated by the second information. In this embodiment of this application, the second information indicates that the PDU session uses the reserved resource, to implement slice resource isolation between the transmit end and the receive end that correspond to the first backhaul RLC channel used by the PDU session.

**In a possible implementation,** before the first donor node sends the first information to the first IAB node, the method further includes:
The first donor node receives third information from a first node, where the third information indicates that the first IAB node is a node that provides a service of a first priority.

In this implementation of this application, a possible specific implementation of slice-based IAB backhaul configuration is provided. Specifically, the first donor node receives the third information from the first node, where the third information indicates that the first IAB node is a node that provides a service of the first priority, for example, may be a node that provides a high-priority service such as public safety. It may be understood that, in a scenario in which the first IAB node initially registers and accesses a network, the first node initiates a UE context setup request including the third information to the first donor node. After receiving the third information, the first donor node may determine, according to an indication of the third information, that the first IAB node is a node that provides a high-priority service, to indicate, by using the first information, the first IAB node to establish the corresponding first backhaul RLC channel based on the slice indicated by the first information, and implement slice resource isolation between transmit end and the receive end that correspond to the first backhaul RLC channel. In this embodiment of this application, the third information indicates that the first IAB node is a node that provides a service of the first priority, to implement slice resource isolation between the transmit end and the receive end that correspond to the first backhaul RLC channel corresponding to the first IAB node.

**In a possible implementation,** the method further includes:
The first donor node receives fourth information from the first IAB node, where the fourth information indicates that the first IAB node is a node that provides a service of the first priority.

In this implementation of this application, a possible specific implementation of slice-based IAB backhaul configuration is provided. Specifically, the first donor node receives the fourth information from the first IAB node, where the fourth information indicates that the first IAB node is a node that provides a service of the first priority, for example, may be the node that provides the high-priority service such as public safety. It may be understood that, in the scenario in which the first IAB node initially registers and accesses the network, the first IAB node sends the fourth information to the first donor node. After receiving the fourth information, the first donor node may determine, according to an indication of the fourth information, that the first IAB node is the node that provides the high-priority service, to indicate, by using the first information, the first IAB node to establish the corresponding first backhaul RLC channel based on the slice indicated by the first information, and implement slice resource isolation between transmit end and the receive end that correspond to the first backhaul RLC channel. In this embodiment of this application, the fourth information indicates that the first IAB node is a node that provides a service of the first priority, to implement slice resource isolation between the transmit end and the receive end that correspond to the first backhaul RLC channel corresponding to the first IAB node.

**In a possible implementation,** the method further includes:
The first donor node determines, based on the third information, that the first backhaul RLC channel needs to use a reserved resource.

In this implementation of this application, a possible specific implementation of slice-based IAB backhaul configuration is provided. Specifically, after receiving the third information from the first node, the first donor node may determine, according to the indication of the third information, that the first IAB node is the node that provides the high-priority service, to determine that the first backhaul RLC channel needs to use a reserved resource, and indicate, by using the first information, the first IAB node to establish the corresponding first backhaul RLC channel based on the slice indicated by the first information, thereby implementing slice resource isolation between the transmit end and the receive end that correspond to the first backhaul RLC channel.

**In a possible implementation,** the first information further includes a slice identifier corresponding to first migration data, the first migration data includes data transmitted after the first IAB node migrates from a connection with the first donor node to a connection with a second donor node, and the second donor node is different from the first donor node.

In this implementation of this application, a possible specific implementation of the first information is provided. Specifically, in an IAB inter-topology data migration scenario, for example, the first IAB node migrates from the connection with the first donor node to the connection with the second donor node. Correspondingly, after migration of the first IAB node between connections with donor nodes, the first migration data is transmitted, where the first information further includes the slice identifier corresponding to the first migration data, and may specifically include one or more slice identifiers corresponding to the first migration data. The first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in the IAB architecture, and ensure prioritized and reliable communication of a high-priority service.

**In a possible implementation,** the first information further indicates a slice corresponding to a second backhaul RLC channel, and the second backhaul RLC channel is a backhaul RLC channel corresponding to the second donor node.

In this implementation of this application, a possible specific implementation of the first information is provided. Specifically, in the IAB inter-topology data migration scenario, for example, the first IAB node migrates from the connection with the first donor node to the connection with the second donor node. The first donor node may notify the second donor node of the slice corresponding to the first backhaul RLC channel in a topology, and the second donor node configures, based on the slice corresponding to the first backhaul RLC channel, the slice corresponding to the second backhaul RLC channel in a topology of the second donor node, and feeds back the slice corresponding to the second backhaul RLC channel to the first donor node. In this case, the first information sent by the first donor node to the first IAB node may further indicate the slice corresponding to the second backhaul RLC channel. It may be understood that the slice corresponding to the second backhaul RLC channel may be the same as or different from the slice corresponding to the first backhaul RLC channel. This is not limited in this embodiment of this application. It may be understood that, after receiving the first information, the first IAB node establishes the second backhaul RLC channel based on the slice indicated by the first information, and performs IAB inter-topology data migration. Because a resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

Optionally, the first information includes one or more slice identifiers corresponding to the second backhaul RLC channel.

Optionally, the first information further indicates that the resource used by the second backhaul RLC channel is a reserved resource, the reserved resource includes a resource reserved for at least one backhaul RLC channel, and the at least one backhaul RLC channel includes the second backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the second backhaul RLC channel, or may be a reserved resource that does not carry a slice identifier. This is not limited in this embodiment of this application.

**In a possible implementation,** when the slice corresponding to the second backhaul RLC channel is different from the slice corresponding to the first backhaul RLC channel, the first information further indicates a mapping relationship between the second backhaul RLC channel and the first backhaul RLC channel.

**In a possible implementation,** the mapping relationship includes:
The slice identifier corresponding to the first backhaul RLC channel is the same as or different from a slice identifier corresponding to the second backhaul RLC channel.

**In a possible implementation,** the mapping relationship includes:
A slice/service type SST corresponding to the first backhaul RLC channel is the same as a slice/service type SST corresponding to the second backhaul RLC channel, and a slice differentiator SD corresponding to the first backhaul RLC channel is different from a slice differentiator SD corresponding to the second backhaul RLC channel; or
a slice/service type SST corresponding to the first backhaul RLC channel is different from a slice/service type SST corresponding to the second backhaul RLC channel, and a slice differentiator SD corresponding to the first backhaul RLC channel is the same as a slice differentiator SD corresponding to the second backhaul RLC channel.

**In a possible implementation,** the method further includes:
The first donor node receives fifth information from the first IAB node, where the fifth information indicates slice resource congestion.

In this implementation of this application, a possible specific implementation of indicating slice resource congestion is provided. Specifically, the first donor node receives the fifth information from the first IAB node, where the fifth information indicates slice resource congestion. It may be understood that after receiving the fifth information, the first donor node determines that current slice resources are congested, and performs traffic control for different slice services, to ensure quality of service of the slice services.

**In a possible implementation,** a node in a first backhaul adaptation protocol BAP topology supports the slice indicated by the first information, the first BAP topology is managed by the first donor node, and the first IAB node belongs to the first BAP topology.

In this implementation of this application, a possible specific implementation of backhaul adaptation protocol (backhaul adaptation protocol, BAP) route configuration is provided. Specifically, the node in the first BAP topology supports the slice indicated by the first information, the first BAP topology includes the first donor node and the first IAB node, and the first BAP topology is managed by the first donor node. It may be understood that when configuring a BAP route, the first donor node needs to consider a slice type supported by each hop of IAB node, to ensure that each IAB node on a BAP path supports a target slice.

According to a second aspect, an embodiment of this application provides a communication method. The method may be performed by a communication apparatus. The communication apparatus may be a device, or may be a chip (system) or a circuit used in the device. This is not limited in this application. The method includes:
A first integrated access and backhaul IAB node receives first information from a first donor node, where the first information indicates a slice corresponding to a first backhaul radio link control RLC channel, and the first backhaul RLC channel is a backhaul RLC channel corresponding to the first IAB node.

The first IAB node establishes the first backhaul RLC channel based on the first information.

In this embodiment of this application, the communication method is provided. The first IAB node receives the first information from the first donor node, and establishes the first backhaul RLC channel based on the first information. The first information indicates the slice corresponding to the first backhaul channel corresponding to the first IAB node. It may be understood that, after receiving the first information, the first IAB node establishes the first backhaul RLC channel based on the slice indicated by the first information. Because a resource used by the first backhaul RLC channel is a slice resource indicated by the first information, slice resource isolation between a transmit end and a receive end that correspond to the first backhaul RLC channel can be implemented, thereby implementing end-to-end slice resource isolation in an IAB architecture. Due to end-to-end slice resource isolation, a backhaul RLC channel corresponding to a high-priority service may use a specific slice resource, to ensure prioritized and reliable communication of the high-priority service.

**In a possible implementation,** the first information includes one or more slice identifiers corresponding to the first backhaul RLC channel.

In this implementation of this application, a possible specific implementation of the first information is provided. Specifically, the first information includes the one or more slice identifiers corresponding to the first backhaul RLC channel, and the first information may indicate, by using the slice identifier included in the first information, the slice corresponding to the first backhaul RLC channel, to implement slice resource isolation between the transmit end and the receive end that correspond to the first backhaul RLC channel.

**In a possible implementation,** the first information further indicates that a resource used by the first backhaul RLC channel is a reserved resource, the reserved resource includes a resource reserved for at least one backhaul RLC channel, and the at least one backhaul RLC channel includes the first backhaul RLC channel.

In this implementation of this application, a possible specific implementation of the first information is provided. Specifically, the first information further indicates that the resource used by the first backhaul RLC channel is the reserved resource, where the reserved resource is a proportion of resources reserved on an air interface for the first backhaul RLC channel, and the proportion of reserved resources may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application. In this embodiment of this application, the first information indicates that the first backhaul RLC channel uses the reserved resource, to implement slice resource isolation between the transmit end and the receive end that correspond to the first backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the first backhaul RLC channel, or may be a reserved resource that does not carry a slice identifier. This is not limited in this embodiment of this application.

**In a possible implementation,** before the first integrated access and backhaul IAB node receives the first information from the first donor node, the method further includes:
The first IAB node sends fourth information to the first donor node, where the fourth information indicates that the first IAB node is a node that provides a service of a first priority.

In this implementation of this application, a possible specific implementation of slice-based IAB backhaul configuration is provided. Specifically, the first IAB node sends the fourth information to the first donor node, where the fourth information indicates that the first IAB node is a node that provides a service of the first priority, for example, may be a node that provides a high-priority service such as public safety. It may be understood that, in a scenario in which the first IAB node initially registers and accesses a network, the first IAB node sends the fourth information to the first donor node. After receiving the fourth information, the first donor node may determine, according to an indication of the fourth information, that the first IAB node is the node that provides the high-priority service, to indicate, by using the first information, the first IAB node to establish the corresponding first backhaul RLC channel based on the slice indicated by the first information, and implement slice resource isolation between transmit end and the receive end that correspond to the first backhaul RLC channel. In this embodiment of this application, the fourth information indicates that the first IAB node is a node that provides a service of the first priority, to implement slice resource isolation between the transmit end and the receive end that correspond to the first backhaul RLC channel corresponding to the first IAB node.

**In a possible implementation,** the first information further includes a slice identifier corresponding to first migration data, the first migration data includes data transmitted after the first IAB node migrates from a connection with the first donor node to a connection with a second donor node, and the second donor node is different from the first donor node.

In this implementation of this application, a possible specific implementation of the first information is provided. Specifically, in an IAB inter-topology data migration scenario, for example, the first IAB node migrates from the connection with the first donor node to the connection with the second donor node. Correspondingly, after migration of the first IAB node between connections with donor nodes, the first migration data is transmitted, where the first information further includes the slice identifier corresponding to the first migration data, and may specifically include one or more slice identifiers corresponding to the first migration data. The first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in the IAB architecture, and ensure prioritized and reliable communication of a high-priority service.

**In a possible implementation,** the first information further indicates a slice corresponding to a second backhaul RLC channel, and the second backhaul RLC channel is a backhaul RLC channel corresponding to the second donor node.

In this implementation of this application, a possible specific implementation of the first information is provided. Specifically, in the IAB inter-topology data migration scenario, for example, the first IAB node migrates from the connection with the first donor node to the connection with the second donor node. The first donor node may notify the second donor node of the slice corresponding to the first backhaul RLC channel in a topology, and the second donor node configures, based on the slice corresponding to the first backhaul RLC channel, the slice corresponding to the second backhaul RLC channel in a topology of the second donor node, and feeds back the slice corresponding to the second backhaul RLC channel to the first donor node. In this case, the first information sent by the first donor node to the first IAB node may further indicate the slice corresponding to the second backhaul RLC channel. It may be understood that the slice corresponding to the second backhaul RLC channel may be the same as or different from the slice corresponding to the first backhaul RLC channel. This is not limited in this embodiment of this application. It may be understood that, after receiving the first information, the first IAB node establishes the second backhaul RLC channel based on the slice indicated by the first information, and performs IAB inter-topology data migration. Because a resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

Optionally, the first information includes one or more slice identifiers corresponding to the second backhaul RLC channel.

Optionally, the first information further indicates that the resource used by the second backhaul RLC channel is a reserved resource, the reserved resource includes a resource reserved for at least one backhaul RLC channel, and the at least one backhaul RLC channel includes the second backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the second backhaul RLC channel, or may be a reserved resource that does not carry a slice identifier. This is not limited in this embodiment of this application.

**In a possible implementation,** when the slice corresponding to the second backhaul RLC channel is different from the slice corresponding to the first backhaul RLC channel, the first information further indicates a mapping relationship between the second backhaul RLC channel and the first backhaul RLC channel.

**In a possible implementation,** the mapping relationship includes:
The slice identifier corresponding to the first backhaul RLC channel is the same as or different from a slice identifier corresponding to the second backhaul RLC channel.

**In a possible implementation,** the mapping relationship includes:
A slice/service type SST corresponding to the first backhaul RLC channel is the same as a slice/service type SST corresponding to the second backhaul RLC channel, and a slice differentiator SD corresponding to the first backhaul RLC channel is different from a slice differentiator SD corresponding to the second backhaul RLC channel; or
a slice/service type SST corresponding to the first backhaul RLC channel is different from a slice/service type SST corresponding to the second backhaul RLC channel, and a slice differentiator SD corresponding to the first backhaul RLC channel is the same as a slice differentiator SD corresponding to the second backhaul RLC channel.

**In a possible implementation,** the method further includes:
The first IAB node sends fifth information to the first donor node, where the fifth information indicates slice resource congestion.

In this implementation of this application, a possible specific implementation of indicating slice resource congestion is provided. Specifically, the first IAB node sends the fifth information to the first donor node, where the fifth information indicates slice resource congestion. It may be understood that after receiving the fifth information, the first donor node determines that current slice resources are congested, and performs traffic control for different slice services, to ensure quality of service of the slice services.

**In a possible implementation,** a node in a first backhaul adaptation protocol BAP topology supports the slice indicated by the first information, the first BAP topology is managed by the first donor node, and the first IAB node belongs to the first BAP topology.

In this implementation of this application, a possible specific implementation of BAP route configuration is provided. Specifically, the node in the first BAP topology supports the slice indicated by the first information, the first BAP topology includes the first donor node and the first IAB node, and the first BAP topology is managed by the first donor node. It may be understood that when configuring a BAP route, the first donor node needs to consider a slice type supported by each hop of IAB node, to ensure that each IAB node on a BAP path supports a target slice.

**In a possible implementation,** the method further includes:
The first IAB node transmits a first data packet to a second IAB node based on a slice identifier corresponding to the first data packet, where the second IAB node is an IAB node that supports a slice corresponding to the first data packet.

In this implementation of this application, a possible specific implementation of BAP rerouting is provided. Specifically, when a next-hop backhaul link is unavailable, the first IAB node may select, based on the slice identifier corresponding to the first data packet, a next-hop IAB node supporting the target slice for rerouting, and transmit the first data packet to the next-hop IAB node (the second IAB node), to ensure that each IAB node on the BAP path supports the target slice.

According to a third aspect, an embodiment of this application provides a communication method. The method may be performed by a communication apparatus. The communication apparatus may be a device, or may be a chip (system) or a circuit used in the device. This is not limited in this application. The method includes:
A first donor node generates first information, where the first information indicates that a resource used by a first backhaul radio link control RLC channel is a reserved resource, the reserved resource includes a resource reserved for at least one backhaul RLC channel, the at least one backhaul RLC channel includes the first backhaul RLC channel, and the first backhaul RLC channel is a backhaul RLC channel corresponding to a first integrated access and backhaul IAB node.

The first donor node sends the first information to the first IAB node.

In this embodiment of this application, the communication method is provided. The first donor node generates the first information, and sends the first information to the first IAB node. The first information indicates that the resource used by the first backhaul RLC channel is the reserved resource, where the reserved resource is a proportion of resources reserved on an air interface for the first backhaul RLC channel, and the proportion of reserved resources may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application. In this embodiment of this application, the first information indicates that the first backhaul RLC channel uses the reserved resource, so that slice resource isolation between a transmit end and a receive end that correspond to the first backhaul RLC channel is implemented, thereby implementing end-to-end slice resource isolation in an IAB architecture. Due to end-to-end slice resource isolation, a backhaul RLC channel corresponding to a high-priority service may use a specific slice resource, to ensure prioritized and reliable communication of the high-priority service.

Optionally, the reserved resource is a resource that can be used only by the at least one backhaul RLC channel when no non-reserved resource exists.

Optionally, the reserved resource may be a reserved resource that carries a slice identifier corresponding to the first backhaul RLC channel, or may be a reserved resource that does not carry a slice identifier. This is not limited in this embodiment of this application.

According to a fourth aspect, an embodiment of this application provides a communication method. The method may be performed by a communication apparatus. The communication apparatus may be a device, or may be a chip (system) or a circuit used in the device. This is not limited in this application. The method includes:
A first integrated access and backhaul IAB node receives first information from a first donor node, where the first information indicates that a resource used by a first backhaul RLC channel is a reserved resource, the reserved resource includes a resource reserved for at least one backhaul RLC channel, the at least one backhaul RLC channel includes the first backhaul RLC channel, and the first backhaul RLC channel is a backhaul RLC channel corresponding to the first IAB node.

The first IAB node establishes the first backhaul RLC channel based on the first information.

In this embodiment of this application, the communication method is provided. The first IAB node receives the first information from the first donor node, and establishes the first backhaul RLC channel based on the first information. The first information further indicates that the resource used by the first backhaul RLC channel is the reserved resource, where the reserved resource is a proportion of resources reserved on an air interface for the first backhaul RLC channel, and the proportion of reserved resources may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application. In this embodiment of this application, the first information indicates that the first backhaul RLC channel uses the reserved resource, so that slice resource isolation between a transmit end and a receive end that correspond to the first backhaul RLC channel is implemented, thereby implementing end-to-end slice resource isolation in an IAB architecture. Due to end-to-end slice resource isolation, a backhaul RLC channel corresponding to a high-priority service may use a specific slice resource, to ensure prioritized and reliable communication of the high-priority service.

Optionally, the reserved resource is a resource that can be used only by the at least one backhaul RLC channel when no non-reserved resource exists.

Optionally, the reserved resource may be a reserved resource that carries a slice identifier corresponding to the first backhaul RLC channel, or may be a reserved resource that does not carry a slice identifier. This is not limited in this embodiment of this application.

According to a fifth aspect, an embodiment of this application provides a communication method. The method may be performed by a communication apparatus. The communication apparatus may be a device, or may be a chip (system) or a circuit used in the device. This is not limited in this application. The method includes:
A first donor node generates first information, where the first information includes a slice identifier corresponding to first migration data, the first migration data includes data transmitted after a first IAB node migrates from a connection with the first donor node to a connection with a second donor node, and the second donor node is different from the first donor node.

The first donor node sends the first information to the first IAB node.

In this embodiment of this application, the communication method is provided. The first donor node generates the first information, and sends the first information to the first IAB node. The first information includes the slice identifier corresponding to the first migration data. It may be understood that, in an IAB inter-topology data migration scenario, for example, the first IAB node migrates from the connection with the first donor node to the connection with the second donor node. Correspondingly, after migration of the first IAB node between connections with donor nodes, the first migration data is transmitted, where the first information further includes the slice identifier corresponding to the first migration data, and may specifically include one or more slice identifiers corresponding to the first migration data. The first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in an IAB architecture, and ensure prioritized and reliable communication of a high-priority service.

**In a possible implementation,** the first information further indicates a slice corresponding to a second backhaul RLC channel, and the second backhaul RLC channel is a backhaul RLC channel corresponding to the second donor node.

In this implementation of this application, a possible specific implementation of the first information is provided. Specifically, in the IAB inter-topology data migration scenario, for example, the first IAB node migrates from the connection with the first donor node to the connection with the second donor node. The first donor node may notify the second donor node of a slice corresponding to a first backhaul RLC channel in a topology, and the second donor node configures, based on the slice corresponding to the first backhaul RLC channel, the slice corresponding to the second backhaul RLC channel in a topology of the second donor node, and feeds back the slice corresponding to the second backhaul RLC channel to the first donor node. In this case, the first information sent by the first donor node to the first IAB node may further indicate the slice corresponding to the second backhaul RLC channel. It may be understood that the slice corresponding to the second backhaul RLC channel may be the same as or different from the slice corresponding to the first backhaul RLC channel. This is not limited in this embodiment of this application. It may be understood that, after receiving the first information, the first IAB node establishes the second backhaul RLC channel based on the slice indicated by the first information, and performs IAB inter-topology data migration. Because a resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

Optionally, the first information includes one or more slice identifiers corresponding to the second backhaul RLC channel.

Optionally, the first information further indicates that the resource used by the second backhaul RLC channel is a reserved resource, the reserved resource includes a resource reserved for at least one backhaul RLC channel, and the at least one backhaul RLC channel includes the second backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the second backhaul RLC channel, or may be a reserved resource that does not carry a slice identifier. This is not limited in this embodiment of this application.

According to a sixth aspect, an embodiment of this application provides a communication method. The method may be performed by a communication apparatus. The communication apparatus may be a device, or may be a chip (system) or a circuit used in the device. This is not limited in this application. The method includes:
A first integrated access and backhaul IAB node receives first information from a first donor node, where the first information includes a slice identifier corresponding to first migration data, the first migration data includes data transmitted after the first IAB node migrates from a connection with the first donor node to a connection with a second donor node, and the second donor node is different from the first donor node.

The first IAB node transmits the first migration data based on the first information.

In this embodiment of this application, the communication method is provided. The first IAB node receives the first information from the first donor node, and transmits the first migration data based on the first information. The first information includes the slice identifier corresponding to the first migration data. It may be understood that, in an IAB inter-topology data migration scenario, for example, the first IAB node migrates from the connection with the first donor node to the connection with the second donor node. Correspondingly, after migration of the first IAB node between connections with donor nodes, the first migration data is transmitted, where the first information further includes the slice identifier corresponding to the first migration data, and may specifically include one or more slice identifiers corresponding to the first migration data. The first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in an IAB architecture, and ensure prioritized and reliable communication of a high-priority service.

**In a possible implementation,** the first information further indicates a slice corresponding to a second backhaul RLC channel, and the second backhaul RLC channel is a backhaul RLC channel corresponding to the second donor node.

In this implementation of this application, a possible specific implementation of the first information is provided. Specifically, in the IAB inter-topology data migration scenario, for example, the first IAB node migrates from the connection with the first donor node to the connection with the second donor node. The first donor node may notify the second donor node of a slice corresponding to a first backhaul RLC channel in a topology, and the second donor node configures, based on the slice corresponding to the first backhaul RLC channel, the slice corresponding to the second backhaul RLC channel in a topology of the second donor node, and feeds back the slice corresponding to the second backhaul RLC channel to the first donor node. In this case, the first information sent by the first donor node to the first IAB node may further indicate the slice corresponding to the second backhaul RLC channel. It may be understood that the slice corresponding to the second backhaul RLC channel may be the same as or different from the slice corresponding to the first backhaul RLC channel. This is not limited in this embodiment of this application. It may be understood that, after receiving the first information, the first IAB node establishes the second backhaul RLC channel based on the slice indicated by the first information, and performs IAB inter-topology data migration. Because a resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

Optionally, the first information includes one or more slice identifiers corresponding to the second backhaul RLC channel.

Optionally, the first information further indicates that the resource used by the second backhaul RLC channel is a reserved resource, the reserved resource includes a resource reserved for at least one backhaul RLC channel, and the at least one backhaul RLC channel includes the second backhaul RLC channel.

Optionally, the reserved resource is a resource that can be used only by the at least one backhaul RLC channel when no non-reserved resource exists.

Optionally, the reserved resource may be a reserved resource that carries the slice identifier corresponding to the second backhaul RLC channel, or may be a reserved resource that does not carry a slice identifier. This is not limited in this embodiment of this application.

According to a seventh aspect, an embodiment of this application provides a communication apparatus. The apparatus includes a module or unit configured to perform the method according to any implementation of the first aspect.

In a possible design, the apparatus includes:
a processing unit, configured to generate first information, where the first information indicates a slice corresponding to a first backhaul radio link control RLC channel, and the first backhaul RLC channel is a backhaul RLC channel corresponding to a first integrated access and backhaul IAB node; and
a communication unit, configured to send the first information to the first IAB node.

For a method performed by the processing unit and the communication unit, refer to the method corresponding to the first aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the seventh aspect and any possible implementation of the seventh aspect, refer to the descriptions of the technical effect corresponding to the first aspect and the corresponding implementations of the first aspect.

According to an eighth aspect, an embodiment of this application provides a communication apparatus. The apparatus includes a module or unit configured to perform the method according to any implementation of the second aspect.

In a possible design, the apparatus includes:
a communication unit, configured to receive first information from a first donor node, where the first information indicates a slice corresponding to a first backhaul radio link control RLC channel, and the first backhaul RLC channel is a backhaul RLC channel corresponding to the communication apparatus; and
a processing unit, configured to establish the first backhaul RLC channel based on the first information.

For a method performed by the processing unit and the communication unit, refer to the method corresponding to the second aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the eighth aspect and any possible implementation of the eighth aspect, refer to the descriptions of the technical effect corresponding to the second aspect and the corresponding implementations of the second aspect.

According to a ninth aspect, an embodiment of this application provides a communication apparatus. The apparatus includes a module or unit configured to perform the method according to any implementation of the third aspect.

In a possible design, the apparatus includes:
a processing unit, configured to generate first information, where the first information indicates that a resource used by a first backhaul radio link control RLC channel is a reserved resource, the reserved resource includes a resource reserved for at least one backhaul RLC channel, the at least one backhaul RLC channel includes the first backhaul RLC channel, and the first backhaul RLC channel is a backhaul RLC channel corresponding to a first integrated access and backhaul IAB node; and
a communication unit, configured to send the first information to the first IAB node.

For a method performed by the processing unit and the communication unit, refer to the method corresponding to the third aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the ninth aspect and any possible implementation of the ninth aspect, refer to the descriptions of the technical effect corresponding to the third aspect and the corresponding implementations of the third aspect.

According to a tenth aspect, an embodiment of this application provides a communication apparatus. The apparatus includes a module or unit configured to perform the method according to any implementation of the fourth aspect.

In a possible design, the apparatus includes:
a communication unit, configured to receive first information from a first donor node, where the first information indicates that a resource used by a first backhaul RLC channel is a reserved resource, the reserved resource includes a resource reserved for at least one backhaul RLC channel, the at least one backhaul RLC channel includes the first backhaul RLC channel, and the first backhaul RLC channel is a backhaul RLC channel corresponding to the communication apparatus; and
a processing unit, configured to establish the first backhaul RLC channel based on the first information.

For a method performed by the processing unit and the communication unit, refer to the method corresponding to the fourth aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the tenth aspect and any possible implementation of the tenth aspect, refer to the descriptions of the technical effect corresponding to the fourth aspect and the corresponding implementations of the fourth aspect.

According to an eleventh aspect, an embodiment of this application provides a communication apparatus. The apparatus includes a module or unit configured to perform the method according to any implementation of the fifth aspect.

In a possible design, the apparatus includes:
a processing unit, configured to generate first information, where the first information includes a slice identifier corresponding to first migration data, the first migration data includes data transmitted after a first IAB node migrates from a connection with the communication apparatus to a connection with a second donor node, and the second donor node is different from the communication apparatus; and
a communication unit, configured to send the first information to the first IAB node.

For a method performed by the processing unit and the communication unit, refer to the method corresponding to the fifth aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the eleventh aspect and any possible implementation of the eleventh aspect, refer to the descriptions of the technical effect corresponding to the fifth aspect and the corresponding implementations of the fifth aspect.

According to a twelfth aspect, an embodiment of this application provides a communication apparatus. The apparatus includes a module or unit configured to perform the method according to any implementation of the sixth aspect.

In a possible design, the apparatus includes:
a communication unit, configured to receive first information from a first donor node, where the first information includes a slice identifier corresponding to first migration data, the first migration data includes data transmitted after the communication apparatus migrates from a connection with the first donor node to a connection with a second donor node, and the second donor node is different from the first donor node; and
a processing unit, configured to transmit the first migration data based on the first information.

For a method performed by the processing unit and the communication unit, refer to the method corresponding to the sixth aspect. Details are not described herein again.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

For technical effect brought by the twelfth aspect and any possible implementation of the twelfth aspect, refer to the descriptions of the technical effect corresponding to the sixth aspect and the corresponding implementations of the sixth aspect.

According to a thirteenth aspect, an embodiment of this application provides a communication apparatus. The communication apparatus includes a processor. The processor is coupled to a memory, and may be configured to execute instructions in the memory, to implement the method according to any one of the first aspect to the sixth aspect and the possible implementations of the first aspect to the sixth aspect. Optionally, the communication apparatus further includes the memory. Optionally, the communication apparatus further includes a communication interface, and the processor is coupled to the communication interface.

According to a fourteenth aspect, an embodiment of this application provides a communication apparatus. The apparatus includes a logic circuit and a communication interface. The communication interface is configured to receive information or send information. The logic circuit is configured to receive information or send information through the communication interface, to enable the communication apparatus to perform the method according to any one of the first aspect to the sixth aspect and the possible implementations of the first aspect to the sixth aspect.

According to a fifteenth aspect, an embodiment of this application provides a computer-readable storage medium. The computer-readable storage medium is configured to store a computer program (which may also be referred to as code or instructions). When the computer program is run on a computer, the method according to any one of the first aspect to the sixth aspect or the possible implementations of the first aspect to the sixth aspect is implemented.

According to a sixteenth aspect, an embodiment of this application provides a computer program product. The computer program product includes a computer program (which may also be referred to as code or instructions). When the computer program is run, a computer is enabled to perform the method according to any one of the first aspect to the sixth aspect or the possible implementations of the first aspect to the sixth aspect.

According to a seventeenth aspect, an embodiment of this application provides a chip. The chip includes a processor. The processor is configured to execute instructions. When the processor executes the instructions, the chip is enabled to perform the method according to any one of the first aspect to the sixth aspect or the possible implementations of the first aspect to the sixth aspect. Optionally, the chip further includes a communication interface, and the communication interface is configured to receive a signal or send a signal.

According to an eighteenth aspect, an embodiment of this application provides a communication system. The communication system includes at least one communication apparatus according to the seventh aspect to the twelfth aspect, communication apparatus according to the thirteenth aspect, communication apparatus according to the fourteenth aspect, or chip according to the seventeenth aspect.

According to a nineteenth aspect, an embodiment of this application provides a communication system. The communication system includes a first donor node and a first IAB node. The first donor node is configured to perform the method according to any one of the first aspect, the third aspect, or the fifth aspect, and the possible implementations of the first aspect, the third aspect, or the fifth aspect. The first IAB node is configured to perform the method according to any one of the second aspect, the fourth aspect, or the sixth aspect, and the possible implementations of the second aspect, the fourth aspect, or the sixth aspect.

In addition, in a process of performing the method according to any one of the first aspect to the sixth aspect and the possible implementations of the first aspect to the sixth aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the sixth aspect and the possible implementations of the first aspect to the sixth aspect, the processor may be a processor specially configured to perform the method, or may be a processor, for example, a general-purpose processor, that performs the method by executing computer instructions in a memory. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, at least one memory is located outside an apparatus.

In another possible implementation, at least one memory is located in an apparatus.

In still another possible implementation, some memories in at least one memory are located in an apparatus, and the other memories are located outside the apparatus.

In this application, the processor and the memory may alternatively be integrated into one device. In other words, the processor and the memory may alternatively be integrated together.

In embodiments of this application, the first information indicates the slice corresponding to the first backhaul RLC channel corresponding to the first IAB node, so that slice resource isolation between the transmit end and the receive end that correspond to the first backhaul RLC channel can be implemented, thereby implementing end-to-end slice resource isolation in the IAB architecture, and ensuring prioritized and reliable communication of the high-priority service.

### BRIEF DESCRIPTION OF DRAWINGS

To describe technical solutions in embodiments of this application more clearly, the following briefly describes accompanying drawings used in embodiments of this application. It is clear that the accompanying drawings described below show merely some embodiments of this application, and a person of ordinary skill in the art may still derive other drawings from these accompanying drawings without creative efforts.
FIG. 1 is a diagram of a structure of an IAB system according to an embodiment of this application;
FIG. 2 is a diagram of a structure of an IAB node according to an embodiment of this application;
FIG. 3 is a diagram of a structure of an IAB network according to an embodiment of this application;
FIG. 4 shows an example of a diagram of an IAB network architecture according to an embodiment of this application;
FIG. 5 shows an example of a BAP topology of an IAB network according to an embodiment of this application;
FIG. 6 is a schematic flowchart of a transport migration management process according to an embodiment of this application;
FIG. 7A is a diagram of mapping according to an embodiment of this application;
FIG. 7B is a diagram of mapping according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11A is a diagram of an information element according to an embodiment of this application;
FIG. 11B is a diagram of an information element according to an embodiment of this application;
FIG. 12 is a schematic flowchart of a communication method according to an embodiment of this application;
FIG. 13 is a diagram of a structure of a communication apparatus according to an embodiment of this application;
FIG. 14 is a diagram of a structure of a communication apparatus according to an embodiment of this application;
FIG. 15 is a diagram of a structure of a communication apparatus according to an embodiment of this application; and
FIG. 16 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

Terms "first", "second", and the like in the specification, claims, and accompanying drawings of this application are used to distinguish between different objects, and are not used to describe a specific order. In addition, terms "include", "have", and any other variants thereof are intended to cover non-exclusive inclusion. For example, a process, method, system, product, device, or the like that includes a series of steps or units is not limited to the listed steps or units, but optionally further includes an unlisted step, unit, or the like, or optionally further includes another inherent step or unit of the process, method, product, device, or the like.

"An embodiment" mentioned in the specification indicates that a particular characteristic, structure, or feature described with reference to this embodiment may be included in at least one embodiment of this application. The phrase appearing in various locations in the specification does not necessarily mean a same embodiment, and neither means an independent or alternative embodiment mutually exclusive with another embodiment. It may be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects and indicates that there may be three relationships. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

It should be noted that in this application, an "indication" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are many manners of indicating the to-be-indicated information. For example, the manners may be but are not limited to a manner of directly indicating the to-be-indicated information, for example, the to-be-indicated information itself or an index of the to-be-indicated information, a manner of indirectly indicating the to-be-indicated information by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of pieces of information that is pre-agreed on (for example, specified in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It should be noted that in this application, "sending" may be understood as "output", and "receiving" may be understood as "input". In "sending information to A", "to A" indicates only a direction of information transmission, A is a destination, and "sending information to A" is not necessarily directly performed over an air interface. "Sending information to A" includes directly sending the information to A and indirectly sending the information to A through a transmitter. Therefore, "sending information to A" may also be understood as "outputting information to A". Similarly, "receiving information from A" indicates that a source of the information is A, and includes directly receiving the information from A and indirectly receiving the information from A through a receiver. Therefore, "receiving information from A" may also be understood as "inputting information from A".

Before this application is described, some terms in embodiments of this application are first briefly explained and described, to facilitate understanding of a person skilled in the art.
(1) A terminal side device is a device that provides voice and/or data connectivity for a user. In embodiments of this application, the terminal side device may be referred to as a user equipment (user equipment, UE), a terminal device, a terminal, a mobile station (mobile station, MS), a mobile terminal (mobile terminal, MT), or the like. For example, the terminal side device may include a handheld device having a wireless connection function or a communication device connected to a wireless modem. The terminal side device may communicate with a core network through a radio access network (radio access network, RAN), and exchange a voice and/or data with the RAN.

Some examples of the terminal side device are a mobile station (mobile station, MS), a subscriber unit (subscriber unit), a cellular phone (cellular phone), a smartphone (smartphone), a wireless data card, a personal digital assistant (personal digital assistant, PDA), a computer, a tablet computer, a wireless modem (modem), a handheld device (handset), a laptop computer (laptop computer), a machine type communication (machine type communication, MTC) terminal, a wearable device, and a vehicle-mounted terminal device. The terminal side device may further include a limited device, for example, a device with low power consumption, a device with a limited storage capability, or a device with a limited computing capability. The terminal side device further includes an information sensing device such as a barcode, radio frequency identification (radio frequency identification, RFID), a sensor, a global positioning system (global positioning system, GPS), or a laser scanner.

A function of the terminal side device may be implemented through a hardware component inside the terminal device, and the hardware component may be a processor and/or a programmable chip inside the terminal device. Optionally, the chip may be implemented by an application-specific integrated circuit (application-specific integrated circuit, ASIC) or a programmable logic device (programmable logic device, PLD). The PLD may be any one of a complex programmable logic device (complex programmable logic device, CPLD), a field programmable gate array (field programmable gate array, FPGA), generic array logic (generic array logic, GAL), and a system on a chip (system on a chip, SoC), or any combination thereof.

(2) A donor base station (donor gNodeB) may also be referred to as a donor node, and a core network may be accessed through the donor node. In other words, the donor base station is a device that connects a terminal side device to the core network in a communication system. The donor base station is usually connected to the core network through a wired link (for example, an optical fiber cable). The donor base station may be responsible for receiving data from the core network and forwarding the data to a wireless backhaul device (for example, an IAB node), or receiving data from the wireless backhaul device and forwarding the data to the core network. Usually, the donor base station may be connected to a network in a wired manner.

In an example, the donor base station may include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and the like; or may include an evolved base station (NodeB, eNB, or e-NodeB, evolved NodeB) in an LTE-advanced (LTE-Advanced, LTE-A) system; or may include a next generation NodeB (next generation NodeB, gNB) in a 5th generation (5th generation, 5G) mobile communication technology new radio (new radio, NR) system. In another example, the donor base station may include a central unit (central unit, CU) (donor-CU or gNB-CU for short in this application) and a distributed unit (distributed unit, DU) (donor-DU or gNB-DU for short in this application). The gNB-CU and the gNB-DU are connected through an F1 interface. The F1 interface may further include a control plane interface (F1-C) and a user plane interface (F1-U). The donor-CU is connected to the core network through a next generation (next generation, NG) interface. The gNB-CU or the donor-CU may alternatively exist in a form in which a user plane (User plane, UP) (CU-UP for short in this application) and a control plane (Control plane, CP) (CU-CP for short in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

A function of the donor base station may be implemented by a hardware component inside the donor base station, for example, a processor and/or a programmable chip inside the donor base station. For example, the chip may be implemented by an ASIC or a PLD. The PLD may be any one of a CPLD, an FPGA, GAL, and a SoC or any combination thereof.

This application provides a communication method, applied to the field of communication technologies, for example, communication in an IAB network. To describe the solutions of this application more clearly, the following first describes some knowledge related to IAB.

In an IAB network, an IAB node may establish a wireless backhaul link to one or more upper-level nodes, and access a core network through the upper-level node. The upper-level node may control (for example, perform data scheduling, timing modulation, and power control on) a relay node by using a plurality of types of signaling. In addition, the relay node may establish an access link to one or more lower-level nodes, and provide an access service for the one or more lower-level nodes. The upper-level node of the relay node may be a base station, or may be another relay node. The lower-level node of the relay node may be a terminal, or may be another relay node. In some cases, an upper-level node of an IAB node may also be referred to as an upstream node or a parent node of the IAB node, and a lower-level node of the IAB node may also be referred to as a downstream node or a child node of the IAB node.

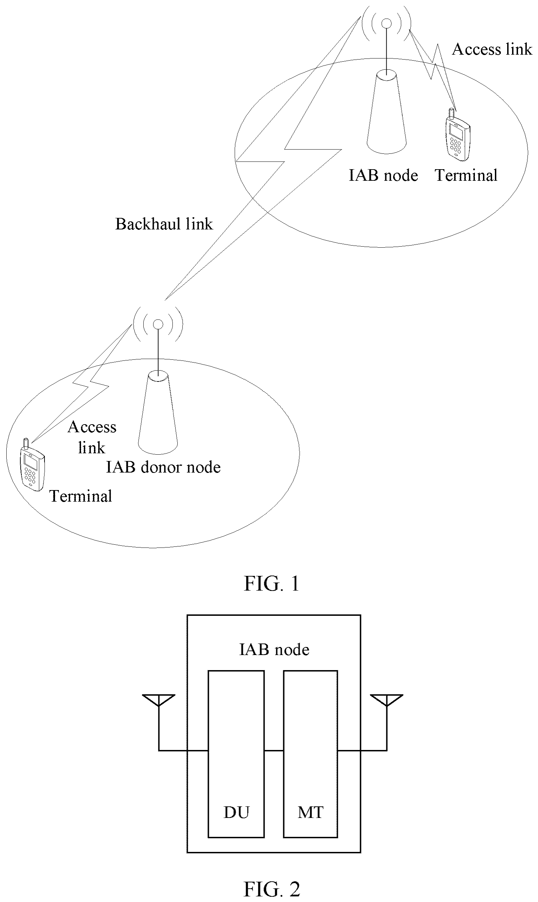

FIG. 1 is a diagram of a structure of an IAB system according to an embodiment of this application.

As shown in FIG. 1, an IAB node provides wireless access and wireless backhaul of an access service for a UE. An IAB donor node (IAB donor node) provides a wireless backhaul function for the IAB node and provides an interface between the UE and a core network. The IAB node is connected to the IAB donor node through a wireless backhaul link, so that the UE served by the IAB node is connected to the core network.

FIG. 2 is a diagram of a structure of an IAB node according to an embodiment of this application.

As shown in FIG. 2, an IAB node in NR may be divided into two parts: an MT and a DU. The MT may alternatively be understood as a component that is similar to a UE and that is in the IAB node, and the MT is referred to as a function camping on the IAB node. Because the MT is similar to a function of a common UE, it may be understood that the MT is used for communication between the IAB node and an upper-level node. The DU is relative to a CU function of a network device, and the DU is used for communication between the IAB node and a lower-level node. It should be understood that the upper-level node may be a base station or another IAB node, and the lower-level node may be a UE or another IAB node.

The communication method provided in embodiments of this application may be applied to various communication systems including a relay node, for example, an NR system, an LTE system, an LTE-A system, a worldwide interoperability for microwave access (worldwide interoperability for microwave access, WiMAX) system, or a wireless local area network (wireless local area network, WLAN). In LTE, the relay node is generally referred to as an RN. In NR, the relay node is generally referred to as an IAB node. In some embodiments, the relay node may also be referred to as a relay device or a relay transmission reception point (relay transmission reception point, rTRP), and an upper-level node of the relay node may be a network device (including a DU of the network device, a CU of the network device, or the like).

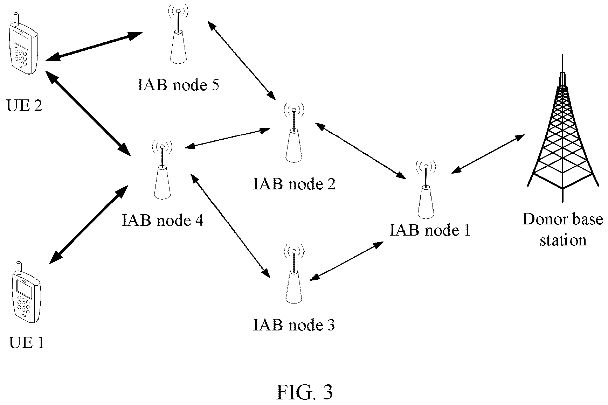

FIG. 3 is a diagram of a structure of an IAB network according to an embodiment of this application.

As shown in FIG. 3, the IAB network includes a plurality of UEs and a plurality of IAB nodes. In FIG. 3, an example in which two UEs and five IAB nodes are included is used. The two UEs are a UE 1 and a UE 2, and the five IAB nodes are an IAB node 1 to an IAB node 5. It should be understood that, in FIG. 3, a thick line indicates an access link, and a thin line indicates a backhaul link. The UE 2 may be connected to a donor base station through the IAB node 5, an IAB node 2, and the IAB node 1. The UE 2 may alternatively be connected to the donor base station through an IAB node 4, the IAB node 2, and the IAB node 1. The UE 2 may alternatively be connected to the donor base station through the IAB node 4, an IAB node 3, and the IAB node 1. The UE 1 may be connected to the donor base station through the IAB node 4, the IAB node 3, and the IAB node 1. The UE 1 may be connected to the donor base station through the IAB node 4, the IAB node 2, and the IAB node 1.

It should be noted that a communication system shown in FIG. 3 is merely an example, and does not constitute a limitation on an application scenario applicable to embodiments of this application. It should be understood that the IAB node is used in embodiments of this application only for description. This does not indicate that solutions in embodiments of this application are used only in an NR scenario. In embodiments of this application, the IAB node may be generally any node or device having a relay function, and use of the IAB node and a relay node in embodiments of this application should be understood as having a same meaning.

In the IAB network, the IAB node is connected to a core network through an IAB donor node. For example, in a standalone (standalone, SA) 5G architecture, the IAB node is connected to a 5G core network (5G core network, 5GC/5GCN) through an IAB donor node. For another example, in a dual connectivity (dual connectivity, DC) or multi-connectivity (multi-connectivity, MC) 5G architecture (for example, a non-standalone (non-standalone, NSA) scenario), on a primary path, the IAB node may be connected to an evolved packet core (evolved packet core, EPC) through an evolved base station (evolved NodeB, eNB), or may be connected to a 5G core network through an IAB donor.

In the IAB network, one or more IAB nodes may be included on a transmission path between the UE and the IAB donor. Each IAB node needs to maintain a wireless backhaul link to a parent node and a wireless link to a child node. If the child node of the IAB node is the UE, there is a wireless access link between the IAB node and the child node (namely, the UE) of the IAB node. If the child node of the IAB node is another IAB node, there is a wireless backhaul link between the IAB node and the child node (namely, the another IAB node) of the IAB node. For example, refer to FIG. 3. On a path "UE 1→IAB node 4→IAB node 3→IAB node 1→IAB donor", the UE 1 accesses the IAB node 4 over a wireless access link, the IAB node 4 is connected to the IAB node 3 over a wireless backhaul link, the IAB node 3 is connected to the IAB node 1 over a wireless backhaul link, and the IAB node 1 is connected to the IAB donor node over a wireless backhaul link.

In embodiments of this application, an access IAB node is an IAB node accessed by a UE, and an intermediate IAB node is an IAB node that provides a wireless backhaul service for a UE or an IAB node. For example, refer to FIG. 3. On the path "UE 1→IAB node 4→IAB node 3→IAB node 1→IAB donor", the IAB node 4 is an access IAB node, and the IAB node 3 and the IAB node 1 are intermediate IAB nodes. It should be noted that an IAB node is an access IAB node for a UE that accesses the IAB node; and an IAB node is an intermediate IAB node for a UE that accesses another IAB node. Therefore, whether an IAB node is specifically an access IAB node or an intermediate IAB node is not fixed and may be determined based on a specific application scenario.

It should be noted that the communication system shown in FIG. 3 is merely an example, and does not constitute a limitation on an application scenario applicable to embodiments of this application. It should be understood that the IAB node is used in embodiments of this application only for description. This does not indicate that the solutions in embodiments of this application are used only in the new radio (new radio, NR) scenario.

The communication method provided in this application is mainly applied to an IAB network, including a standalone (standalone, SA) IAB network and a non-standalone (non-standalone, NSA) IAB network. An IAB node includes an MT part and a DU part. An IAB donor may be further divided into a DU part and a CU part, and the CU may be further divided into a CU-CP part and a CU-UP part.

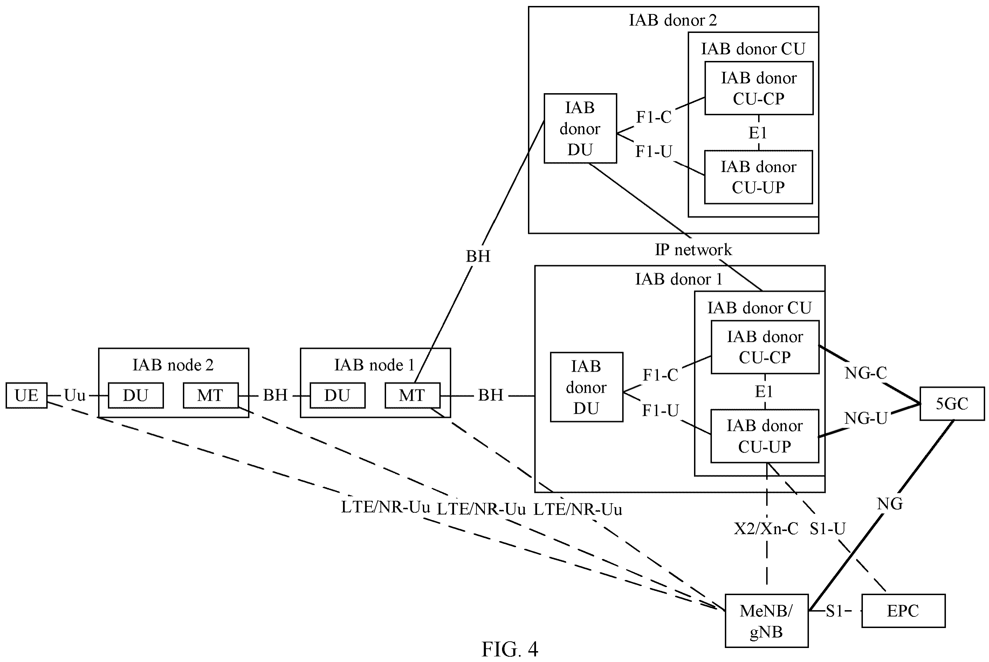

FIG. 4 shows an example of a diagram of an IAB network architecture according to an embodiment of this application.

As shown in FIG. 4, an example in which an IAB node is connected to an IAB donor over a wireless backhaul link is shown. FIG. 4 uses an example in which one UE, two IAB nodes, and two IAB donors are included. The two IAB nodes are an IAB node 1 and an IAB node 2, and the two IAB nodes each include an MT part and a DU part. The two IAB donors are an IAB donor 1 and an IAB donor 2. The two IAB donors are the IAB donor 1 and the IAB donor 2. Each IAB donor may be further divided into a DU part and a CU part, and the CU may be further divided into a CU-CP part and a CU-UP part. In FIG. 4, communication is performed between an MT of the IAB node 2 and a DU of the IAB node 1, between an MT of the IAB node 1 and a DU of the IAB donor 1, and between the MT of the IAB node 1 and a DU of the IAB donor 2 over wireless backhaul (backhaul, BH) links (link); a Uu interface is established between the UE and an IAB 2-DU; an F1-C interface is established between an IAB donor DU and an IAB donor CU-CP, and an F1-U interface is established between an IAB donor DU and an IAB donor CU-UP; and the DU of the IAB donor 2 is connected to a CU of the IAB donor 1 through an internet protocol (internet protocol, IP) network (network).

There is an F1 interface between a DU of each IAB node and a CU of an IAB donor. The F1 interface may include two parts: a control plane part and a user plane part. The user plane part is maintained between the IAB-DU and an IAB donor CU-UP, and the control plane part is maintained between the IAB-DU and an IAB donor CU-CP. The F1 interface between the IAB-DU and the IAB donor CU is not shown in FIG. 4. Certainly, the F1 interface may also be referred to as an F1* interface. A name of the interface is not limited in embodiments of this application. In addition, for example, the interface is referred to as the F1 interface in this specification.

The F1 interface may support a user plane protocol (F1-U/F1*-U) and a control plane protocol (F1-C/F1*-C). The user plane protocol includes one or more of the following protocol layers: a general packet radio service (general packet radio service, GPRS) tunneling protocol user plane (GPRS tunneling protocol user plane, GTP-U) protocol layer, a user datagram protocol (user datagram protocol, UDP) protocol layer, an IP protocol layer, or the like. The control plane protocol includes one or more of the following protocol layers: an F1 application protocol (F1 application protocol, F1AP) layer, a stream control transport protocol (stream control transport protocol, SCTP) layer, an IP protocol layer, or the like. Interface management, IAB-DU management, UE context-related configuration, and the like may be performed between the IAB node and the IAB donor through a control plane of the F1/F1* interface. Functions such as user plane data transmission and downlink transmission status feedback may be performed between the IAB node and the IAB donor through a user plane of the F1/F1* interface.

When the IAB node works in an SA mode, the IAB node may establish single connectivity to one parent node, or may establish dual connectivity to two parent nodes. The two parent nodes may be controlled by a same IAB donor, or may be respectively controlled by different IAB donors. An F1 interface is established between the DU part of the IAB node and one IAB donor, and the IAB donor may be connected to a 5G core network, that is, a dashed line part in FIG. 4. An IAB-donor-CU-CP is connected to a control plane network element (for example, an access and mobility management function) in the 5GC through an NG control plane interface (NG-C), and an IAB-donor-CU-UP is connected to a user plane network element (for example, a user plane function) in the 5GC through an NG user plane interface (NG-U).

When the IAB node works in an NSA mode, the IAB-donor-CU-UP may be connected to an EPC (for example, connected to a serving gateway (serving gateway, SGW)) through an S1 user plane interface (S1-U), there is an LTE-Uu air interface connection between an MeNB and an MT of the IAB node, there is an X2-C interface between the MeNB and the IAB-donor-CU-CP, and the MeNB is connected to the EPC through an S1 interface (including an S1 interface user plane and an S1 interface control plane), that is, a dashed line part in FIG. 4.

In another possible case, the MeNB in FIG. 4 may alternatively be replaced with a 5G base station gNB. An LTE-Uu interface in FIG. 4 is correspondingly replaced with an NR-Uu interface. A user plane interface and/or a control plane interface may be established between the gNB and the 5GC. The gNB and the IAB-donor provide a dual connectivity service for the IAB node. The gNB may serve as a primary base station of the IAB node or a secondary base station of the IAB node.

The foregoing is an example of an application scenario of the technical solutions in embodiments of this application. It should be understood that the technical solutions in embodiments of this application are not limited to being applied only to the network architecture shown in FIG. 4.

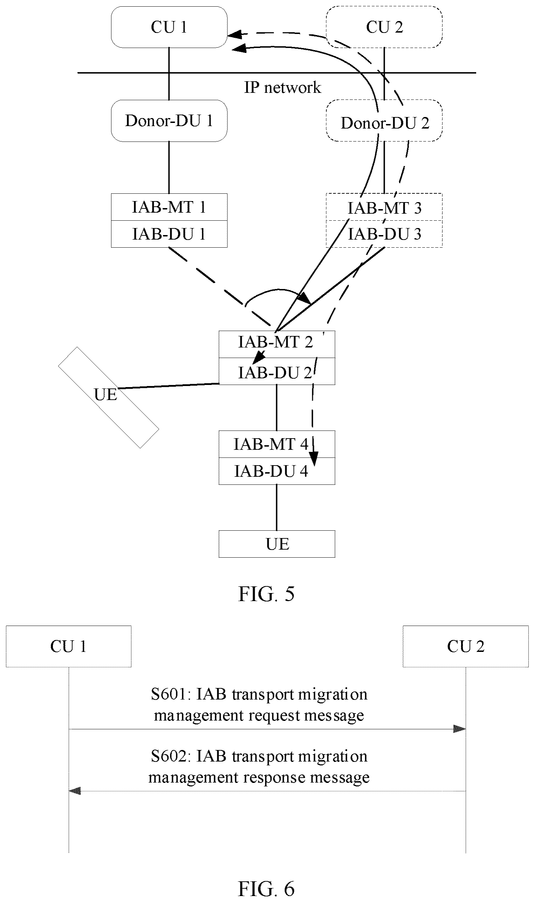

A border node in an IAB network may be referred to as a border IAB node, or referred to as a border node for short. The border node in the IAB network has the following characteristic: An IAB-donor-CU at which a DU of the border node is terminated is different from an IAB-donor-CU at which a DU of at least one parent node of the border node is terminated. It is assumed that an IAB node in the IAB network has two parent nodes, a DU of the IAB node is terminated at a CU of an IAB-donor 1, a DU of one parent node of the IAB node is terminated at the CU of the IAB-donor 1, and a DU of the other parent node of the IAB node is terminated at a CU of an IAB-donor 2. In this case, the IAB node is a border node (for example, an IAB-node 2 in FIG. 5). For example, in the IAB network, to enhance network robustness and implement more refined load balancing and topology management, the border node may perform a partial migration (Partial migration) process, to be specific, an MT (IAB-MT 2 in FIG. 5) of the border node is handed over from one parent node (IAB-node 1 in FIG. 5) to the other parent node (IAB-node 3 in FIG. 5). The two parent nodes belong to topologies controlled by different donor CUs. To be specific, the IAB-node 1 in FIG. 5 belongs to a topology (solid-line box part in FIG. 5) controlled by a donor-CU 1, and the IAB-node 3 belongs to a topology (dashed-line box part in FIG. 5) controlled by a donor-CU 2. In the partial migration process, the IAB-MT 2 switches from an RRC connection with the CU 1 to an RRC connection with the CU 2, but an F1 connection of an IAB-DU 2 is still terminated at the CU 1 (as shown by a solid-line arrow in FIG. 5), and does not migrate to the CU 2 together with the IAB-MT 2. It may be understood that, an F1 connection of a child node, that is, an IAB node 4, of the IAB node 2 may also be terminated at the CU 1 (as shown by a dashed-line arrow in FIG. 5).

For example, an F1 interface of the IAB node 2 is terminated at the CU 1, and the IAB donor 1 may be referred to as an F1-terminating donor node (F1-terminating IAB-donor) of the IAB node 2. If there is an RRC connection between the CU 2 and the IAB node 2, but the F1 connection of the IAB node 2 is not terminated at the CU 2, the IAB donor 2 may be referred to as a non-F1-terminating IAB-donor (Non-F1-terminating IAB-donor) of the IAB node 2.

After the IAB node 2 is switched from the CU 1 topology to the CU 2 topology, to migrate data traffic of the IAB node 2 from the CU 1 topology to the CU 2 topology, the 3rd generation partnership project (3rd generation partnership project, 3GPP) Release-17 standard (R17) introduces an IAB transport migration management (IAB Transport Migration Management) process. To be specific, the CU 1 may perform an IAB transport migration management (IAB Transport Migration Management) process with an Xn interface between the CU 1 and the CU 2 to migrate the data traffic of the IAB node 2 to the CU 2. The IAB transport migration management process is shown in FIG. 6. Details are as follows:
Step S601: The CU 1 sends an IAB transport migration management request (IAB Transport Migration Management request) message to the CU 2. Correspondingly, the CU 2 receives the IAB transport migration management request message.

The CU 1 is an F1-terminating IAB-donor of the IAB node 2, and the CU 2 is a non-F1-terminating IAB-donor of the IAB node 2. The IAB transport migration management request message is used to request to migrate the data traffic of the IAB node 2 to the CU 2.

Step S602: The CU 2 sends an IAB transport migration management response (IAB Transport Migration Management response) message to the CU 1. Correspondingly, the CU 1 receives the IAB transport migration management response message.

The IAB transport migration management response message is used to respond to the IAB transport migration management request message, to migrate the data traffic of the IAB node 2 to the CU 2.

In the "IAB transport migration management" process, the CUs exchange quality of service (quality of service, QoS) of the data traffic and corresponding integrated access and backhaul (integrated access and backhaul, BAP) configuration information, to implement offloading (offloading) of the data traffic. It is specified in the R17 standard that the process is initiated by the F1-terminating IAB-donor (namely, the CU 1 in FIG. 5) to the non-F1-terminating IAB-donor (namely, the CU 2 in FIG. 5).

To support flexible and dense deployment of NR cells, an IAB network supports multi-hop backhaul. A multi-hop network relates to a routing function between nodes. In addition, to simplify an IAB external interface and reduce impact on a 5G network, 3GPP introduces a new IAB-specific protocol, namely, the backhaul adaptation protocol (backhaul adaptation protocol, BAP), which is responsible for data packet routing and bearer mapping functions in the IAB network.

A BAP routing function may implement data transmission from a transmit end to a receive end through a specified route. A BAP packet header (including a destination BAP address and a BAP path ID) is added to upper-layer data at the transmit end, and the BAP packet header is deleted at the receive end before the data is forward to an upper layer.

A BAP backhaul channel mapping function may implement bearer mapping of data packets in the IAB network, to meet quality of service (QoS) requirements of the data packets.

An IAB-donor-CU allocates a unique L2 address (BAP address) to each IAB-node controlled by the IAB-donor-CU, so that each IAB-node in the network can be uniquely identified. When there are a plurality of paths, each BAP address may be associated with a plurality of path IDs. Source nodes (IAB-donor-DU in a downlink DL direction and access IAB-node in an uplink UL direction) add, at BAP layers of the source nodes, BAP packet headers to data packets being transmitted by the source nodes. The BAP packet header includes a BAP address and a BAP path ID.

Each IAB-node is configured with routing tables (configured by the IAB-donor-CU) for an uplink UL and a downlink DL, and the routing table includes a next hop identifier of each BAP path ID. Separate routing tables are reserved for the DL and UL directions. An IAB-DU uses a DL table, and an IAB-MT uses a UL table. The routing table may indicate a specific child node (if in DL) or a specific parent node (if in UL) to which a data packet needs to be forwarded. When the access IAB-node receives a data packet, the data packet is forwarded to a higher layer, and is processed in a manner of processing an incoming F1-U or F1-C data packet by a common DU.

In addition to forwarding a data packet to a child node or a parent node, the BAP also performs mapping between ingress and egress BH RLC channels. Because the BH RLC channel is used to transmit a data packet between IAB nodes (or between an IAB-donor-DU and an IAB-node), BH RLC channel mapping needs to meet a quality of service (QoS) requirement of the data packet. Similar to an RLC channel between a DU and a UE, different BH RLC channels may be configured with different QoS parameters, such as priorities and guaranteed bit rates. An IAB-node is configured with a mapping relationship, and identifies, based on a routing table, a next child/parent node and an egress BH RLC channel to which a data packet needs to be forwarded.

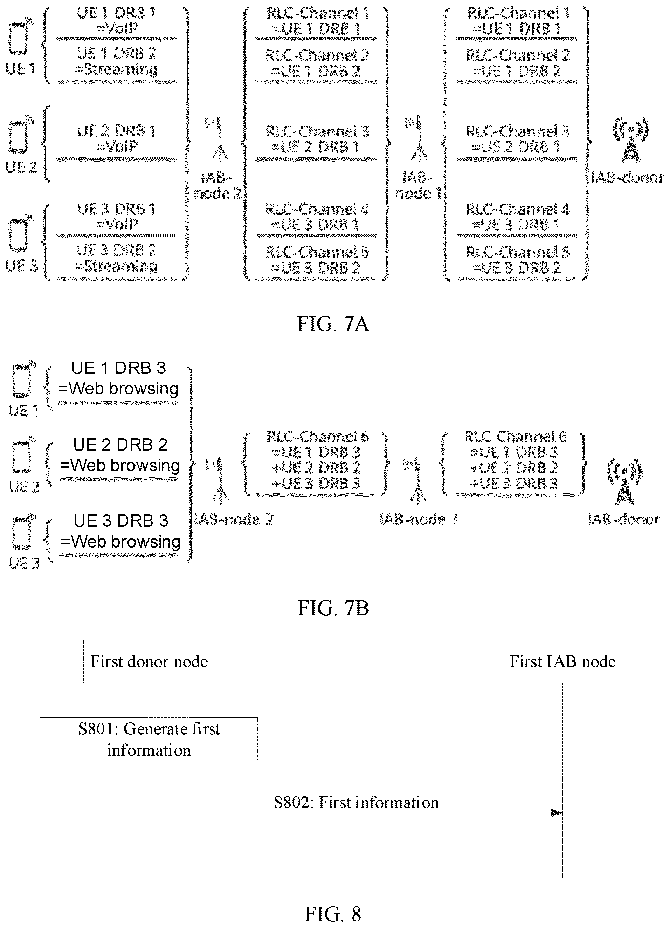

Mapping between a UE radio bearer and a BH RLC channel supports 1:1 mapping and N:1 mapping. For details, refer to FIG. 7A and FIG. 7B. FIG. 7A and FIG. 7B are diagrams of mapping according to embodiments of this application.

As shown in FIG. 7A, mapping between a UE radio bearer and a BH RLC channel supports 1:1 mapping, and each UE radio bearer is mapped to a separate BH RLC channel. For example, a UE 1 radio bearer DRB 1 is mapped to a separate BH RLC channel 1, a UE 1 radio bearer DRB 2 is mapped to a separate BH RLC channel 2, a UE 2 radio bearer DRB 1 is mapped to a separate BH RLC channel 3, a UE 3 radio bearer DRB 1 is mapped to a separate BH RLC channel 4, and a UE 3 radio bearer DRB 2 is mapped to a separate BH RLC channel 5, to ensure a fine QoS granularity at a UE radio bearer level. 1:1 mapping requires more BH RLC channels and more signaling overheads to establish and release the BH RLC channels.

As shown in FIG. 7B, mapping between a UE radio bearer and a BH RLC channel supports N:1 mapping. A plurality of UE radio bearers are multiplexed onto a single BH RLC channel based on QoS templates and specific parameters of the bearers. For example, a UE 1 radio bearer DRB 3, a UE 2 radio bearer DRB 2, and a UE 3 radio bearer DRB 3 are mapped to a single BH RLC channel 6. N:1 mapping requires less signaling overheads because a small quantity of BH RLC channels need to be established.

In addition, with development of mobile communication technologies, various new services and application scenarios continuously emerge, and requirements of these services on network functions, connection performance, security, and the like are greatly different. If a single network is used to carry these services, it is difficult to meet requirements on high bandwidth, low latency, and high reliability. In addition, building a new network for each type of service brings huge costs. This requires 5G to be flexible, scalable, and able to meet different service requirements. Therefore, 5G provides customized network services for users through end-to-end network slicing (Network Slicing). Specifically, through flexible allocation of network resources and on-demand networking, 5G virtualizes a plurality of isolated logical subnets with different characteristics on a same physical infrastructure, to provide specific services for users. Different logical subnets are identified and distinguished by using pieces of "single network slice selection assistance information" (single network slice selection assistance information, S-NSSAI). Each piece of S-NSSAI may include but is not limited to the following content:
a slice/service type (slice/service type, SST), which points to a specific feature and service type of a slice; and
a slice differentiator (slice differentiator, SD), which is used as a supplement to the SST, may be further used to distinguish between a plurality of network slice instances that meet a same SST, and is optional content.

Currently, IAB needs to support UE access, and slicing is a mandatory feature for end-to-end UE PDU sessions. However, existing slicing only considers slice resource and functional network element isolation on an access side and a core network side, and does not consider a backhaul link part in an IAB scenario. In other words, slicing cannot implement end-to-end slice resource isolation in an IAB architecture. Consequently, prioritized and reliable communication of a high-priority service cannot be ensured.

To resolve the technical problem that end-to-end slice resource isolation cannot be implemented in the IAB architecture, and consequently prioritized and reliable communication of the high-priority service cannot be ensured, in embodiments of this application, a new communication method is provided. A slice-based backhaul link configuration in an IAB scenario is designed, to implement end-to-end slice isolation in an IAB architecture, and ensure prioritized and reliable communication of a high-priority service.

FIG. 8 is a schematic flowchart of a communication method according to an embodiment of this application. The communication method is applied to the field of communication technologies, for example, communication in an IAB network. The communication method includes but is not limited to the following steps.

S801: A first donor node generates first information.

S802: The first donor node sends the first information to a first IAB node, and correspondingly, the first IAB node receives the first information from the first donor node.

It may be understood that the first donor node in this embodiment of this application is a device equipped with a processor/chip that can be configured to execute computer-executable instructions, or may be the processor/chip that can be configured to execute computer-executable instructions. This is not limited in this embodiment of this application. Optionally, the first donor node may be the IAB donor node in FIG. 1, the donor base station in FIG. 3, the IAB donor 1 or the IAB donor 2 in FIG. 4, the CU 1 or the CU 2 in FIG. 5 and FIG. 6, or the like, and is configured to perform the communication method in this embodiment of this application, to implement end-to-end slice isolation in an IAB architecture, and ensure prioritized and reliable communication of a high-priority service.

It may be understood that the first IAB node in this embodiment of this application is a device equipped with a processor/chip that can be configured to execute computer-executable instructions, or may be the processor/chip that can be configured to execute computer-executable instructions. This is not limited in this embodiment of this application. Optionally, the first IAB node may be the IAB node in FIG. 1, the IAB node in FIG. 2, the IAB node 1, the IAB node 2, the IAB node 3, the IAB node 4, or the IAB node 5 in FIG. 3, the IAB node 1 or the IAB node 2 in FIG. 4, or the like, and is configured to participate in performing the communication method in this embodiment of this application, to implement end-to-end slice isolation in the IAB architecture, and ensure prioritized and reliable communication of the high-priority service.

**The first information** indicates a slice corresponding to a first backhaul RLC channel corresponding to the first IAB node.

It may be understood that, after receiving the first information, the first IAB node establishes the first backhaul RLC channel based on the slice indicated by the first information. Because a resource used by the first backhaul RLC channel is a slice resource indicated by the first information, slice resource isolation between a transmit end and a receive end that correspond to the first backhaul RLC channel can be implemented, thereby implementing end-to-end slice resource isolation in the IAB architecture. Due to end-to-end slice resource isolation, a backhaul RLC channel corresponding to the high-priority service may use a specific slice resource, to ensure prioritized and reliable communication of the high-priority service.

Specifically, the first information may indicate the slice corresponding to the first backhaul RLC channel corresponding to the first IAB node in the following manners:
**Manner 1: The first information includes one or more slice identifiers corresponding to the first backhaul RLC channel.**

For example, the slice identifier included in the first information may be single network slice selection assistance information (S-NSSAI), and is used to identify and distinguish between different slices. Each piece of S-NSSAI may include but is not limited to the following content:
an SST, which points to a specific feature and service type of a slice; and
an SD, which is used as a supplement to the SST, may be further used to distinguish between a plurality of network slice instances that meet a same SST, and may be optional content.

It may be understood that the first information may indicate, by using the slice identifier included in the first information, the slice corresponding to the first backhaul RLC channel, to implement slice resource isolation between the transmit end and the receive end that correspond to the first backhaul RLC channel.

**Manner 2: The first information indicates that the resource used by the first backhaul RLC channel is a reserved resource.**

The reserved resource includes a resource reserved for at least one backhaul RLC channel, and the at least one backhaul RLC channel includes the first backhaul RLC channel. The at least one backhaul RLC channel may be preset or specified in a protocol, or may be configured by using signaling. For example, the reserved resource may be a proportion of resources reserved on an air interface (for example, a Uu interface). For example, the reserved resource may be 5% of air interface resources. When only 5% of schedulable resources remain on the air interface, the remaining 5% of resources are the reserved resource. 95% of resources that have already been scheduled and used are non-scheduled resources.

Optionally, the reserved resource may be a specific resource reserved on an air interface. For example, the reserved resource is a specific time-frequency position or area. A resource outside the specific time-frequency position or area is a non-reserved resource.

The non-reserved resource may be scheduled according to a normal air interface resource scheduling algorithm. The reserved resource can only be scheduled for use by the at least one backhaul RLC channel.

The reserved resource may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application.

The reserved resource may be a resource that can be used only by the at least one backhaul RLC channel (the at least one backhaul RLC channel includes the first backhaul RLC channel) when no non-reserved resource exists.

Optionally, the reserved resource may be a reserved resource that carries a slice identifier corresponding to the first backhaul RLC channel, or may be a reserved resource that does not carry a slice identifier. This is not limited in this embodiment of this application.

In this embodiment of this application, the first information indicates that the first backhaul RLC channel uses the reserved resource, to implement slice resource isolation between the transmit end and the receive end that correspond to the first backhaul RLC channel.

It may be understood that the foregoing two manners are merely used as possible examples for description, and should not constitute a limitation on embodiments of this application. All embodiments obtained based on a supplement or a proper variation of the example manners fall within the protection scope of embodiments of this application.

**In a possible embodiment,** before sending the first information to the first IAB node, the first donor node further receives second information from a first node.

The second information indicates that a resource used by a first protocol data unit PDU session is a reserved resource, and the first PDU session includes a PDU session corresponding to the first donor node.

The first node in this embodiment of this application is a device equipped with a processor/chip that can be configured to execute computer-executable instructions, or may be the processor/chip that can be configured to execute computer-executable instructions. This is not limited in this embodiment of this application. Optionally, the first node may be an access and mobility management function (access and mobility management function, AMF), and is configured to participate in performing the communication method in this embodiment of this application, to implement end-to-end slice isolation in the IAB architecture, and ensure prioritized and reliable communication of the high-priority service.

It may be understood that, in a scenario in which the first node initiates a PDU session resource setup request to the first donor node, after receiving the second information, the first donor node establishes the PDU session based on the reserved resource indicated by the second information.

In this embodiment of this application, the second information indicates that the PDU session uses the reserved resource, to implement slice resource isolation between the transmit end and the receive end that correspond to the first backhaul RLC channel used by the PDU session.

**In a possible embodiment,** before sending the first information to the first IAB node, the first donor node further receives third information from a first node.

The third information indicates that the first IAB node is a node that provides a service of a first priority, for example, may be a node that provides a high-priority service such as public safety. This is not limited in this embodiment of this application.

The first node in this embodiment of this application is a device equipped with a processor/chip that can be configured to execute computer-executable instructions, or may be the processor/chip that can be configured to execute computer-executable instructions. This is not limited in this embodiment of this application. Optionally, the first node may be an AMF, and is configured to participate in performing the communication method in this embodiment of this application, to implement end-to-end slice isolation in the IAB architecture, and ensure prioritized and reliable communication of the high-priority service.

It may be understood that, in a scenario in which the first IAB node initially registers and accesses a network, the first node initiates a UE context setup request including the third information to the first donor node. After receiving the third information, the first donor node may determine, according to an indication of the third information, that the first IAB node is a node that provides a high-priority service, to indicate, by using the first information, the first IAB node to establish the corresponding first backhaul RLC channel based on the slice indicated by the first information, and implement slice resource isolation between transmit end and the receive end that correspond to the first backhaul RLC channel.

In this embodiment of this application, the third information indicates that the first IAB node is a node that provides a service of the first priority, to implement slice resource isolation between the transmit end and the receive end that correspond to the first backhaul RLC channel corresponding to the first IAB node.

**Optionally,** before sending the first information to the first IAB node, the first donor node further receives fourth information from the first IAB node.

The fourth information indicates that the first IAB node is a node that provides a service of the first priority, for example, may be the node that provides the high-priority service such as public safety. This is not limited in this embodiment of this application.

It may be understood that, in the scenario in which the first IAB node initially registers and accesses the network, the first IAB node sends the fourth information to the first donor node. After receiving the fourth information, the first donor node may determine, according to an indication of the fourth information, that the first IAB node is the node that provides the high-priority service, to indicate, by using the first information, the first IAB node to establish the corresponding first backhaul RLC channel based on the slice indicated by the first information, and implement slice resource isolation between transmit end and the receive end that correspond to the first backhaul RLC channel.

In this embodiment of this application, the fourth information indicates that the first IAB node is a node that provides a service of the first priority, to implement slice resource isolation between the transmit end and the receive end that correspond to the first backhaul RLC channel corresponding to the first IAB node.

**Optionally,** after receiving the third information from the first node, the first donor node determines, based on the third information, that the first backhaul RLC channel needs to use a reserved resource.

It may be understood that, after receiving the third information from the first node, the first donor node may determine, according to the indication of the third information, that the first IAB node is the node that provides the high-priority service, to determine that the first backhaul RLC channel needs to use a reserved resource, and indicate, by using the first information, the first IAB node to establish the corresponding first backhaul RLC channel based on the slice indicated by the first information, thereby implementing slice resource isolation between the transmit end and the receive end that correspond to the first backhaul RLC channel.

**In a possible embodiment,** the first information further includes a slice identifier corresponding to first migration data.

The first migration data includes data transmitted after the first IAB node migrates from a connection with the first donor node to a connection with a second donor node, and the second donor node is different from the first donor node.

The second donor node in this embodiment of this application is a device equipped with a processor/chip that can be configured to execute computer-executable instructions, or may be the processor/chip that can be configured to execute computer-executable instructions. This is not limited in this embodiment of this application. Optionally, the second donor node may be the IAB donor 2 in FIG. 4, and the first donor node is the IAB donor 1 in FIG. 4; the second donor node may be the CU 2 in FIG. 5 and FIG. 6, and the first donor node is the CU 1 in FIG. 5 and FIG. 6; or another combination is used. The second donor node is configured to participate in performing the communication method in this embodiment of this application, to implement end-to-end slice isolation in the IAB architecture, and ensure prioritized and reliable communication of the high-priority service.

It may be understood that, in an IAB inter-topology data migration scenario, the first IAB node migrates from the connection with the first donor node to the connection with the second donor node. Correspondingly, after migration of the first IAB node between connections with donor nodes, the first migration data is transmitted, where the first information further includes the slice identifier corresponding to the first migration data, and may specifically include one or more slice identifiers corresponding to the first migration data.

In this embodiment of this application, the first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in the IAB architecture, and ensure prioritized and reliable communication of a high-priority service.

**In a possible embodiment,** the first information further indicates a slice corresponding to a second backhaul RLC channel.

The second backhaul RLC channel is a backhaul RLC channel corresponding to the second donor node.

Optionally, the first information includes one or more slice identifiers corresponding to the second backhaul RLC channel.

For specific descriptions, refer to the manner 1: The first information includes the one or more slice identifiers corresponding to the first backhaul RLC channel. Details are not described herein again.

Optionally, the first information further indicates that a resource used by the second backhaul RLC channel is a reserved resource.

For specific descriptions, refer to the manner 2: The first information indicates that the resource used by the first backhaul RLC channel is the reserved resource. Details are not described herein again.

It may be understood that, in the IAB inter-topology data migration scenario, the first IAB node migrates from the connection with the first donor node to the connection with the second donor node. The first donor node may notify the second donor node of the slice corresponding to the first backhaul RLC channel in a topology, and the second donor node configures, based on the slice corresponding to the first backhaul RLC channel, the slice corresponding to the second backhaul RLC channel in a topology of the second donor node, and feeds back the slice corresponding to the second backhaul RLC channel to the first donor node. In this case, the first information sent by the first donor node to the first IAB node may further indicate the slice corresponding to the second backhaul RLC channel. It may be understood that the slice corresponding to the second backhaul RLC channel may be the same as or different from the slice corresponding to the first backhaul RLC channel. This is not limited in this embodiment of this application.

It may be understood that, after receiving the first information, the first IAB node establishes the second backhaul RLC channel based on the slice indicated by the first information, and performs IAB inter-topology data migration. Because the resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

**In a possible embodiment,** when the slice corresponding to the second backhaul RLC channel is different from the slice corresponding to the first backhaul RLC channel, the first information further indicates a mapping relationship between the second backhaul RLC channel and the first backhaul RLC channel.

Optionally, the mapping relationship includes:
The slice identifier corresponding to the first backhaul RLC channel is the same as or different from the slice identifier corresponding to the second backhaul RLC channel.

Optionally, the mapping relationship includes:
A slice/service type SST corresponding to the first backhaul RLC channel is the same as a slice/service type SST corresponding to the second backhaul RLC channel, and a slice differentiator SD corresponding to the first backhaul RLC channel is different from a slice differentiator SD corresponding to the second backhaul RLC channel; or
a slice/service type SST corresponding to the first backhaul RLC channel is different from a slice/service type SST corresponding to the second backhaul RLC channel, and a slice differentiator SD corresponding to the first backhaul RLC channel is the same as a slice differentiator SD corresponding to the second backhaul RLC channel.

In this embodiment of this application, the first IAB node may establish a corresponding backhaul RLC channel based on the mapping relationship indicated by the first information, to implement end-to-end resource isolation in the IAB architecture, and ensure prioritized and reliable communication of the high-priority service.

It may be understood that a bearer mapping configuration of a backhaul RLC channel in this embodiment of this application is for a case in which only a single piece of S-NSSAI is carried for the backhaul RLC channel.

The first donor node configures the mapping relationship between the first backhaul RLC channel and the second backhaul RLC channel based on slice information (S-NSSAI) corresponding to backhaul RLC channels.

Optionally, the slice information may be S-NSSAI, or may be a slice group ID, to be specific, a network slice AS group (network slice AS group, NSAG) ID, or may be slice list (slice list) information. This is not limited in this embodiment of this application.

**In a possible embodiment,** when a plurality of pieces of S-NSSAI are carried for the backhaul RLC channel, the bearer mapping configuration of the backhaul RLC channel may be as follows:
The first donor node configures the mapping relationship between the first backhaul RLC channel and the second backhaul RLC channel based on the slice information (S-NSSAI) corresponding to the backhaul RLC channels.

Optionally, the slice information may be S-NSSAI, or may be a slice group ID, to be specific, an NSAG ID, or may be slice list (slice list) information. This is not limited in this embodiment of this application.

For a single IAB node, configuring the mapping relationship between the first backhaul RLC channel and the second backhaul RLC channel may include but is not limited to the following:
(1) S-NSSAI lists corresponding to the first backhaul RLC channel and the second backhaul RLC channel are the same;
(2) S-NSSAI lists corresponding to the first backhaul RLC channel and the second backhaul RLC channel are not completely the same;
(3) in S-NSSAI lists corresponding to the first backhaul RLC channel and the second backhaul RLC channel, there is a largest quantity of pieces of same S-NSSAI; or
(4) in S-NSSAI lists corresponding to the first backhaul RLC channel and the second backhaul RLC channel, there is a largest quantity of same SSTs.

In this embodiment of this application, the bearer mapping configuration of the backhaul RLC channel can be used to implement end-to-end resource isolation in the IAB architecture, and ensure prioritized and reliable communication of the high-priority service.

**In a possible embodiment,** the first IAB node further supports rerouting. To be specific, when a radio link failure or buffer insufficiency occurs on a next-hop IAB node, a current IAB node may forward a data packet through another connected IAB node. This embodiment of this application provides a slice-based rerouting method, to ensure that the data packet can obtain resource assurance of a corresponding slice on a rerouting path. Details are as follows:

When one or more pieces of S-NSSAI are carried for the backhaul RLC channel, during rerouting of the first IAB node:
in an uplink (uplink, UL) direction, after selecting a next-hop IAB node, the first IAB node selects a backhaul RLC channel that has same S-NSSAI (a same SST) as or that has a largest quantity of pieces of overlapping S-NSSAI (overlapping SSTs) with a backhaul RLC channel on which a rerouted data packet is located, to forward the UL data packet; and
in a downlink (downlink, DL) direction, the first IAB node selects, as a next-hop node for rerouting, a child node corresponding to a backhaul RLC channel that has same S-NSSAI (a same SST) as or that has a largest quantity of pieces of overlapping S-NSSAI (overlapping SSTs) with a backhaul RLC channel on which a rerouted data packet is located, and another operation is consistent with that in UL.

In this embodiment of this application, slice-based reliable data transmission in the IAB architecture can be implemented, and prioritized and reliable communication of the high-priority service can be ensured.

**In a possible embodiment,** the first donor node further receives fifth information from the first IAB node.

The fifth information indicates slice resource congestion.

It may be understood that after receiving the fifth information, the first donor node determines that current slice resources are congested, and performs traffic control for different slice services, to ensure quality of service of the slice services.

**In a possible embodiment,** a node in a first backhaul adaptation protocol BAP topology supports the slice indicated by the first information.

The node in the first BAP topology supports the slice indicated by the first information, the first BAP topology includes the first donor node and the first IAB node, and the first BAP topology is managed by the first donor node.

It may be understood that when configuring a BAP route, the first donor node needs to consider a slice type supported by each hop of IAB node, to ensure that each IAB node on a BAP path supports a target slice.

**In a possible embodiment,** the first IAB node transmits a first data packet to a second IAB node based on a slice identifier corresponding to the first data packet.

The second IAB node is an IAB node that supports a slice corresponding to the first data packet.

It may be understood that, when a next-hop backhaul link is unavailable, the first IAB node may select, based on the slice identifier corresponding to the first data packet, a next-hop IAB node supporting the target slice for rerouting, and transmit the first data packet to the next-hop IAB node (the second IAB node), to ensure that each IAB node on the BAP path supports the target slice.

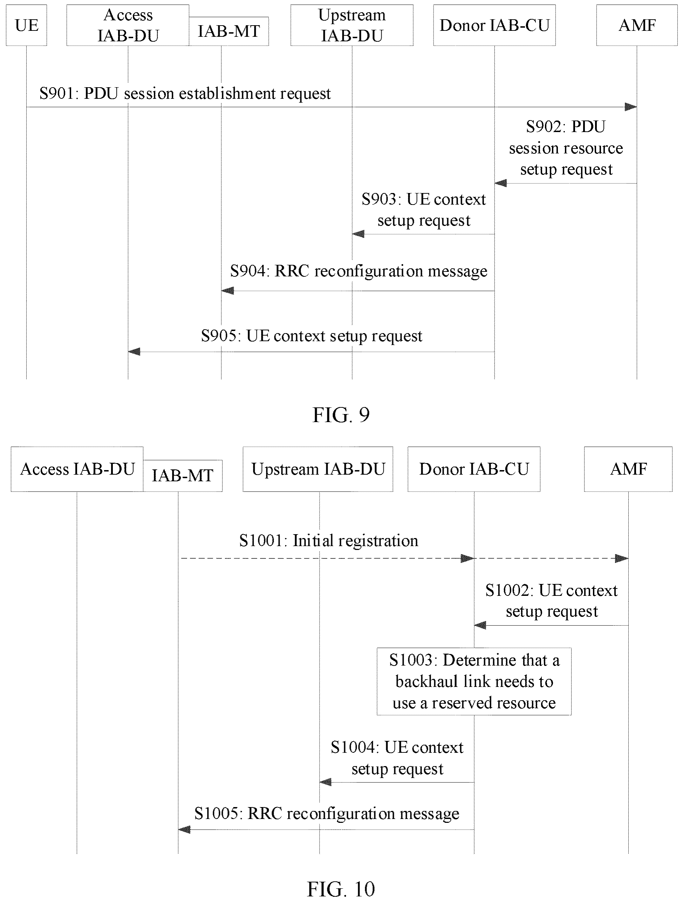

FIG. 9 is a schematic flowchart of a communication method according to an embodiment of this application. It may be understood that steps in this embodiment of this application may be considered as a proper variation or supplement to the embodiment of FIG. 8. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network. The communication method includes but is not limited to the following steps.

S901: A UE initiates a PDU session establishment request to an AMF, and correspondingly, the AMF receives the PDU session establishment request from the UE, where the PDU session establishment request includes S-NSSAI corresponding to each PDU session.

S902: The AMF initiates a PDU session resource setup request to a donor IAB-CU, and correspondingly, the donor IAB-CU receives the PDU session resource setup request from the AMF, where the PDU session resource setup request includes the S-NSSAI corresponding to each PDU session.

Optionally, the PDU session resource setup request further carries session type indication information, to indicate that a PDU session corresponding to the donor IAB-CU needs to use a reserved resource.

S903: The donor IAB-CU initiates a UE context setup request for each IAB-MT to an upstream IAB-DU of an access IAB node, and correspondingly, the upstream IAB-DU of the access IAB node receives the UE context setup request from the donor IAB-CU.

The upstream IAB-DU of the access IAB node may be a DU of a donor IAB node, or may be a DU of an intermediate IAB node. This is not limited in this embodiment of this application.

The UE context setup request may further carry one or more of the following information:
(1) corresponding S-NSSAI carried for each established backhaul RLC channel, where all related backhaul RLC channels are used to carry slice data in step S901;
(2) a corresponding S-NSSAI list, that is, NSSAI, carried for each established backhaul RLC channel, where because N:1 bearer mapping is used, a single backhaul RLC channel may carry data of a plurality of slices; and
   it may be understood that, in this case, when performing resource scheduling, the upstream IAB-DU may refer to whether each piece of S-NSSAI has a reserved resource on an air interface, and if at least one piece of S-NSSAI has a reserved resource, the corresponding reserved resource is used to schedule the backhaul RLC channel; and
(3) a reserve indication, carried to indicate a backhaul RLC channel corresponding to the upstream IAB-DU to use a reserved resource on an air interface.

S904: The donor IAB-CU sends a radio resource control (radio resource control, RRC) reconfiguration message to an access IAB-MT, and correspondingly, the access IAB-MT receives the RRC reconfiguration message from the donor IAB-CU.

The RRC reconfiguration message may further carry one or more pieces of information, which is consistent with one or more pieces of information carried in the UE context setup request in step S903. Details are not described herein again.

S905: The donor IAB-CU sends a UE context setup request to an access IAB-DU, and correspondingly, the access IAB-DU receives the UE context setup request from the donor IAB-CU, where the UE context setup request may carry corresponding S-NSSAI.

It should be understood that, when the donor IAB-CU configures a mapping bearer relationship, backhaul RLC channels that belong to same S-NSSAI or whose corresponding reserve indications indicate reserved resources are associated. In other words, a single backhaul RLC channel can be mapped only to a backhaul RLC channel that carries same S-NSSAI or that uses a reserved resource.

In this embodiment of this application, first information indicates a slice corresponding to a first backhaul RLC channel corresponding to a first IAB node, so that slice resource isolation between a transmit end and a receive end that correspond to the first backhaul RLC channel can be implemented, thereby implementing end-to-end slice resource isolation in an IAB architecture, and ensuring prioritized and reliable communication of a high-priority service.

FIG. 10 is a schematic flowchart of a communication method according to an embodiment of this application. It may be understood that steps in this embodiment of this application may be considered as a proper variation or supplement to the embodiment of FIG. 8, or may be considered as a proper variation of the embodiment of FIG. 9. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network. The communication method includes but is not limited to the following steps.

S1001: An IAB-MT performs initial registration.

Optionally, the IAB-MT may indicate a network by using RRC or NAS, and the IAB-MT serves as a serving node of a high-priority service (for example, a public safety service).

S1002: An AMF sends a UE context setup request to a donor IAB-CU, and correspondingly, the donor IAB-CU receives the UE context setup request from the AMF.

The UE context setup request may include supported NSSAI and a supported public network integrated non-public network (public network integrated non-public network, PNI-NPN) of the IAB-MT. Optionally, indication information indicating that the IAB-MT serves as the serving node of the high-priority service may be further carried.

S1003: The donor IAB-CU determines, based on the NSSAI, the PNI-NPN, or service type indication information sent by the AMF, that a backhaul link associated with the IAB-MT needs to use a reserved resource on an air interface.

S1004: The donor IAB-CU initiates a UE context setup request for each IAB-MT to an upstream IAB-DU of an access IAB node, and correspondingly, the upstream IAB-DU of the access IAB node receives the UE context setup request from the donor IAB-CU.

The upstream IAB-DU of the access IAB node may be a DU of a donor IAB node, or may be a DU of an intermediate IAB node. This is not limited in this embodiment of this application.

The UE context setup request may further carry one or more of the following information:
(1) corresponding S-NSSAI carried for each established backhaul RLC channel, where all related backhaul RLC channels are used to carry slice data in step S901;
(2) a corresponding S-NSSAI list, that is, NSSAI, carried for each established backhaul RLC channel, where because N:1 bearer mapping is used, a single backhaul RLC channel may carry data of a plurality of slices; and
   it may be understood that, in this case, when performing resource scheduling, the upstream IAB-DU may refer to whether each piece of S-NSSAI has a reserved resource on an air interface, and if at least one piece of S-NSSAI has a reserved resource, the corresponding reserved resource is used to schedule the backhaul RLC channel; and
(3) a reserve indication, carried to indicate a backhaul RLC channel corresponding to the upstream IAB-DU to use a reserved resource on an air interface.

S1005: The donor IAB-CU sends an RRC reconfiguration message to an access IAB-MT, and correspondingly, the access IAB-MT receives the RRC reconfiguration message from the donor IAB-CU.

The RRC reconfiguration message may further carry one or more pieces of information, which is consistent with one or more pieces of information carried in the UE context setup request in step S1004. Details are not described herein again.

It should be understood that, when the donor IAB-CU configures a mapping bearer relationship, backhaul RLC channels that belong to same S-NSSAI or whose corresponding reserve indications indicate reserved resources are associated. In other words, a single backhaul RLC channel can be mapped only to a backhaul RLC channel that carries same S-NSSAI or that uses a reserved resource.

In this embodiment of this application, first information indicates a slice corresponding to a first backhaul RLC channel corresponding to a first IAB node, so that slice resource isolation between a transmit end and a receive end that correspond to the first backhaul RLC channel can be implemented, thereby implementing end-to-end slice resource isolation in an IAB architecture, and ensuring prioritized and reliable communication of a high-priority service.

In addition, an embodiment of this application further provides a communication method. It may be understood that steps in this embodiment of this application may be considered as a proper variation or supplement to the embodiment of FIG. 8, may be considered as a proper variation of the embodiment of FIG. 9, or may be considered as a proper variation of the embodiment of FIG. 10. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network. The communication method includes but is not limited to the following steps.

A first donor node generates first information, and sends the first information to a first IAB node. Correspondingly, the first IAB node receives the first information from the first donor node.

The first information indicates that a resource used by a first backhaul radio link control RLC channel is a reserved resource, the reserved resource includes a resource reserved for at least one backhaul RLC channel, the at least one backhaul RLC channel includes the first backhaul RLC channel, and the first backhaul RLC channel is a backhaul RLC channel corresponding to the first integrated access and backhaul IAB node.

It may be understood that the reserved resource is a proportion of resources reserved on an air interface for the first backhaul RLC channel, and the proportion of reserved resources may be a priority resource (a resource preferentially used by the first backhaul RLC channel), a dedicated resource (a resource used only by the first backhaul RLC channel), a shared resource (including but not limited to a resource shared and used by a plurality of backhaul RLC channels such as the first backhaul RLC channel), or the like. This is not limited in this embodiment of this application.

Optionally, the reserved resource is a resource that can be used only by the at least one backhaul RLC channel when no non-reserved resource exists.

Optionally, the reserved resource may be a reserved resource that carries a slice identifier corresponding to the first backhaul RLC channel, or may be a reserved resource that does not carry a slice identifier. This is not limited in this embodiment of this application.

In this embodiment of this application, the first information indicates that the first backhaul RLC channel uses the reserved resource, so that slice resource isolation between a transmit end and a receive end that correspond to the first backhaul RLC channel is implemented, thereby implementing end-to-end slice resource isolation in an IAB architecture. Due to end-to-end slice resource isolation, a backhaul RLC channel corresponding to a high-priority service may use a specific slice resource, to ensure prioritized and reliable communication of the high-priority service.

In addition, an embodiment of this application further provides a communication method. It may be understood that steps in this embodiment of this application may be considered as a proper variation or supplement to the embodiment of FIG. 8, may be considered as a proper variation of the embodiment of FIG. 9, or may be considered as a proper variation of the embodiment of FIG. 10. Alternatively, it may be understood that the communication method in this embodiment of this application may be considered as an embodiment that can be independently performed. This is not limited in this application.

The communication method provided in this embodiment of this application is applied to the field of communication technologies, for example, communication in an IAB network, and specifically, applied to an IAB inter-topology data migration scenario. For details, refer to FIG. 5 and FIG. 6. A first IAB node migrates from a connection with a first donor node to a connection with a second donor node. Correspondingly, after migration of the first IAB node between connections with donor nodes, first migration data is transmitted. The communication method includes but is not limited to the following steps.

The first donor node generates first information, and sends the first information to the first IAB node. Correspondingly, the first IAB node receives the first information from the first donor node.

The first migration data includes data transmitted after the first IAB node migrates from the connection with the first donor node to the connection with the second donor node, and the second donor node is different from the first donor node.

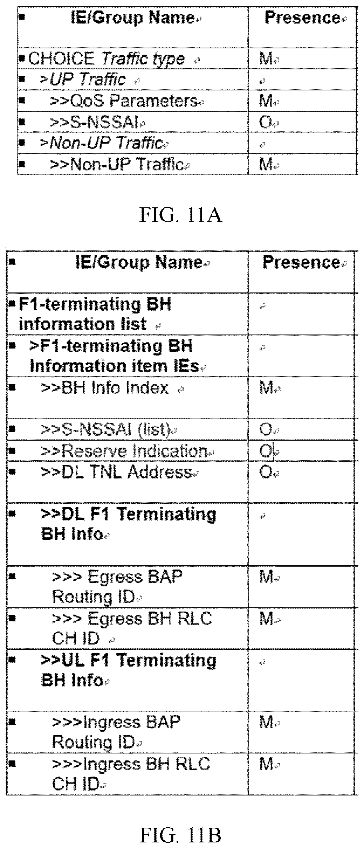

The first information includes a slice identifier corresponding to the first migration data, and may specifically include one or more slice identifiers corresponding to the first migration data. For details, refer to FIG. 11A. FIG. 11A is a diagram of an information element according to an embodiment of this application. In FIG. 11A, in consideration of slice enhancement, S-NSSAI corresponding to the migration data is added to the first information.

It may be understood that the first information may indicate, by using the slice identifier that corresponds to the first migration data and that is included in the first information, a slice corresponding to a backhaul RLC channel used by the first migration data, to implement slice resource isolation between a transmit end and a receive end that correspond to the backhaul RLC channel used by the first migration data, implement end-to-end slice resource isolation in an IAB architecture, and ensure prioritized and reliable communication of a high-priority service.

In a possible embodiment, the first information further indicates a slice corresponding to a second backhaul RLC channel.

The second backhaul RLC channel is a backhaul RLC channel corresponding to the second donor node.

Optionally, the first information includes one or more slice identifiers corresponding to the second backhaul RLC channel.

For specific descriptions, refer to the manner 1: The first information includes the one or more slice identifiers corresponding to the first backhaul RLC channel. Details are not described herein again.

Optionally, the first information further indicates that a resource used by the second backhaul RLC channel is a reserved resource.

For specific descriptions, refer to the manner 2: The first information indicates that the resource used by the first backhaul RLC channel is the reserved resource. Details are not described herein again.

For details, refer to FIG. 11B. FIG. 11B is a diagram of an information element according to an embodiment of this application. In FIG. 11B, in consideration of slice enhancement, the first information needs to indicate S-NSSAI (list) corresponding to each backhaul RLC channel or indicate a reserve indication, to indicate a slice or a reserved resource used by a backhaul RLC channel related to a peer CU.

It may be understood that the CU may perform access control on the backhaul RLC channel based on the slice. To be specific, if the corresponding slice is not supported, the CU rejects to establish the backhaul RLC channel.

It may be understood that the CU may implement slice remapping oriented to the backhaul RLC channel. To be specific, slices corresponding to ingress and egress backhaul RLC channels may be different, and the backhaul RLC channels are carried by using different slice resources.

It may be understood that, after receiving the first information, the first IAB node establishes the second backhaul RLC channel based on the slice indicated by the first information, and performs IAB inter-topology data migration. Because the resource used by the second backhaul RLC channel is a slice resource indicated by the first information, slice resource isolation between a transmit end and a receive end that correspond to the second backhaul RLC channel can be implemented, thereby implementing end-to-end slice resource isolation in the IAB architecture. Due to end-to-end slice resource isolation, a backhaul RLC channel corresponding to a high-priority service may use a specific slice resource, to ensure prioritized and reliable communication of the high-priority service.

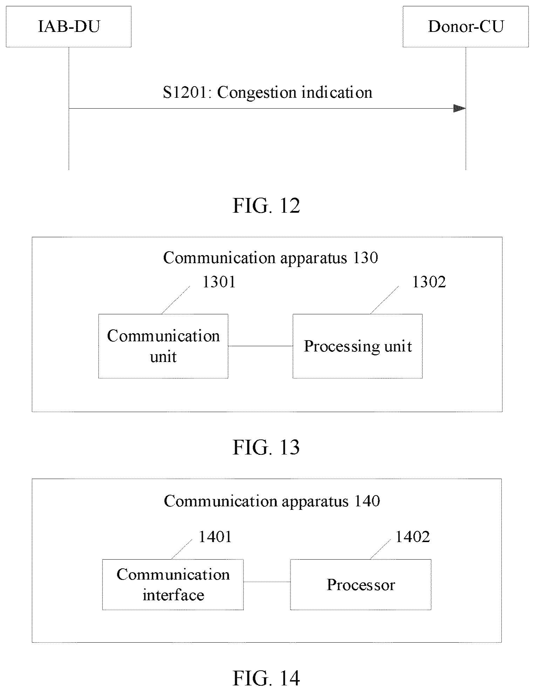

FIG. 12 is a schematic flowchart of a communication method according to an embodiment of this application. It may be understood that steps in this embodiment of this application may be considered as a supplement to the embodiment of FIG. 8, FIG. 9, or FIG. 10. Alternatively, it may be understood that the communication method in this embodiment of this application may be considered as an embodiment that can be independently performed. This is not limited in this application. The communication method provided in this embodiment of this application is applied to the field of communication technologies, for example, communication in an IAB network. The communication method includes but is not limited to the following step.

S1201: A first IAB node (IAB-DU) sends a congestion indication to a first donor node (donor-CU), to indicate slice resource congestion. Correspondingly, the first donor node (donor-CU) receives the congestion indication from the first IAB node (IAB-DU).

It may be understood that after receiving the congestion indication, the first donor node determines that current slice resources are congested, and performs traffic control for different slice services, to ensure quality of service of the slice services.

Alternatively, optionally, the first IAB node transmits a first data packet to a second IAB node based on a slice identifier corresponding to the first data packet.

The second IAB node is an IAB node that supports a slice corresponding to the first data packet.

It may be understood that, when a next-hop backhaul link is unavailable (for example, slice resources are congested), the first IAB node may select, based on the slice identifier corresponding to the first data packet, a next-hop IAB node supporting a target slice for rerouting, and transmit the first data packet to the next-hop IAB node (the second IAB node), to ensure that each IAB node on a BAP path supports the target slice.

The foregoing describes in detail the methods provided in embodiments of this application. The following provides an apparatus for implementing any one of the methods in embodiments of this application. For example, an apparatus including units (or means) for implementing steps performed by a device in any one of the foregoing methods is provided.

FIG. 13 is a diagram of a structure of a communication apparatus according to an embodiment of this application.

As shown in FIG. 13, the communication apparatus 130 may include a communication unit 1301 and a processing unit 1302. The communication unit 1301 and the processing unit 1302 may be software, hardware, or a combination of software and hardware.

The communication unit 1301 may implement a sending function and/or a receiving function, and the communication unit 1301 may also be described as a transceiver unit. Alternatively, the communication unit 1301 may be a unit integrating an obtaining unit and a sending unit. The obtaining unit is configured to implement a receiving function, and the sending unit is configured to implement a sending function. Optionally, the communication unit 1301 may be configured to receive information sent by another apparatus, and may be further configured to send information to the another apparatus.

In a possible design, the communication apparatus 130 may correspond to the first donor node in the method embodiments of FIG. 8, FIG. 9, and FIG. 10. For example, the communication apparatus 130 may be the first donor node, or may be a chip in the first donor node. The communication apparatus 130 may include units configured to perform operations performed by the first donor node in the method embodiments of FIG. 8, FIG. 9, and FIG. 10. In addition, the units in the communication apparatus 130 are separately configured to implement the operations performed by the first donor node in the method embodiments of FIG. 8, FIG. 9, and FIG. 10. The units are described as follows:

The processing unit 1302 is configured to generate first information, where the first information indicates a slice corresponding to a first backhaul radio link control RLC channel, and the first backhaul RLC channel is a backhaul RLC channel corresponding to a first integrated access and backhaul IAB node.

The communication unit 1301 is configured to send the first information to the first IAB node.

In a possible implementation, the first information includes one or more slice identifiers corresponding to the first backhaul RLC channel.

In a possible implementation, the first information further indicates that a resource used by the first backhaul RLC channel is a reserved resource, the reserved resource includes a resource reserved for at least one backhaul RLC channel, and the at least one backhaul RLC channel includes the first backhaul RLC channel.

In a possible implementation, the communication unit 1301 is further configured to receive second information from a first node, where the second information indicates that a resource used by a first protocol data unit PDU session is a reserved resource, and the first PDU session includes a PDU session corresponding to the communication apparatus.

In a possible implementation, the communication unit 1301 is further configured to receive third information from a first node, where the third information indicates that the first IAB node is a node that provides a service of a first priority.

In a possible implementation, the communication unit is further configured to receive fourth information from the first IAB node, where the fourth information indicates that the first IAB node is a node that provides a service of the first priority.

In a possible implementation, the processing unit 1302 is further configured to determine, based on the third information, that the first backhaul RLC channel needs to use a reserved resource.

In a possible implementation, the first information further includes a slice identifier corresponding to first migration data, the first migration data includes data transmitted after the first IAB node migrates from a connection with the communication apparatus to a connection with a second donor node, and the second donor node is different from the communication apparatus.

In a possible implementation, the first information further indicates a slice corresponding to a second backhaul RLC channel, and the second backhaul RLC channel is a backhaul RLC channel corresponding to the second donor node.

In a possible implementation, the communication unit 1301 is further configured to receive fifth information from the first IAB node, where the fifth information indicates slice resource congestion.

In a possible implementation, a node in a first backhaul adaptation protocol BAP topology supports the slice indicated by the first information, the first BAP topology is managed by the communication apparatus, and the first IAB node belongs to the first BAP topology.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

In another possible design of the communication apparatus 130 shown in FIG. 13, the communication apparatus 130 may correspond to the first IAB node in the method embodiments of FIG. 8, FIG. 9, and FIG. 10. For example, the communication apparatus 130 may be the first IAB node, or may be a chip in the first IAB node. The communication apparatus 130 may include units configured to perform operations performed by the first IAB node in the method embodiments of FIG. 8, FIG. 9, and FIG. 10. In addition, the units in the communication apparatus 130 are separately configured to implement the operations performed by the first IAB node in the method embodiments of FIG. 8, FIG. 9, and FIG. 10. The units are described as follows:
The communication unit 1301 is configured to receive first information from a first donor node, where the first information indicates a slice corresponding to a first backhaul radio link control RLC channel, and the first backhaul RLC channel is a backhaul RLC channel corresponding to the communication apparatus.

The processing unit 1302 is configured to establish the first backhaul RLC channel based on the first information.

In a possible implementation, the first information includes one or more slice identifiers corresponding to the first backhaul RLC channel.

In a possible implementation, the first information further indicates that a resource used by the first backhaul RLC channel is a reserved resource, the reserved resource includes a resource reserved for at least one backhaul RLC channel, and the at least one backhaul RLC channel includes the first backhaul RLC channel.

In a possible implementation, the communication unit 1301 is further configured to send fourth information to the first donor node, where the fourth information indicates that the communication apparatus is a node that provides a service of a first priority.

In a possible implementation, the first information further includes a slice identifier corresponding to first migration data, the first migration data includes data transmitted after the communication apparatus migrates from a connection with the first donor node to a connection with a second donor node, and the second donor node is different from the first donor node.

In a possible implementation, the first information further indicates a slice corresponding to a second backhaul RLC channel, and the second backhaul RLC channel is a backhaul RLC channel corresponding to the second donor node.

In a possible implementation, the communication unit 1301 is further configured to send fifth information to the first donor node, where the fifth information indicates slice resource congestion.

In a possible implementation, a node in a first backhaul adaptation protocol BAP topology supports the slice indicated by the first information, the first BAP topology is managed by the first donor node, and the communication apparatus belongs to the first BAP topology.

In a possible implementation, the processing unit 1302 is further configured to transmit a first data packet to a second IAB node based on a slice identifier corresponding to the first data packet, where the second IAB node is an IAB node that supports a slice corresponding to the first data packet.

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used in a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

According to this embodiment of this application, the units in the apparatus shown in FIG. 13 may be separately or all combined into one or more other units, or a specific unit (or some specific units) in the apparatus may be further split into a plurality of units with more detailed functions. This can implement a same operation without affecting implementation of technical effect of this embodiment of this application. The foregoing units are obtained through division based on logical functions. During actual application, a function of one unit may be implemented by a plurality of units, or functions of a plurality of units are implemented by one unit. In other embodiments of this application, an electronic device may further include other units. During actual application, the functions may alternatively be implemented with assistance of the other units, and may be implemented by a plurality of units in collaboration.

It should be noted that, for implementation of the units, reference may be further made to corresponding descriptions in the method embodiments of FIG. 8, FIG. 9, and FIG. 10.

In the communication apparatus 130 described in FIG. 13, the first information indicates the slice corresponding to the first backhaul RLC channel corresponding to the first IAB node, so that slice resource isolation between a transmit end and a receive end that correspond to the first backhaul RLC channel can be implemented, thereby implementing end-to-end slice resource isolation in an IAB architecture, and ensuring prioritized and reliable communication of a high-priority service.

FIG. 14 is a diagram of a structure of a communication apparatus according to an embodiment of this application.

It should be understood that the communication apparatus 140 shown in FIG. 14 is merely an example. The communication apparatus in this embodiment of this application may further include another component, or include a component with a function similar to that of each component in FIG. 14, or does not necessarily need to include all components in FIG. 14.

The communication apparatus 140 includes a communication interface 1401 and at least one processor 1402.

The communication apparatus 140 may correspond to any node or device in a first donor node and a first IAB node. The communication interface 1401 is configured to receive and send signals, and the at least one processor 1402 executes program instructions, so that the communication apparatus 140 implements a corresponding procedure of the method performed by a corresponding device in the method embodiments.

In a possible design, the communication apparatus 140 may correspond to the first donor node in the method embodiments of FIG. 8, FIG. 9, and FIG. 10. For example, the communication apparatus 140 may be the first donor node, or may be a chip in the first donor node. The communication apparatus 140 may include components configured to perform operations performed by the first donor node in the method embodiments. In addition, the components in the communication apparatus 140 are separately configured to implement the operations performed by the first donor node in the method embodiments. Details may be as follows.

The first donor node generates first information, where the first information indicates a slice corresponding to a first backhaul radio link control RLC channel, and the first backhaul RLC channel is a backhaul RLC channel corresponding to a first integrated access and backhaul IAB node.

The first donor node sends the first information to the first IAB node.

In another possible design, the communication apparatus 140 may correspond to the first IAB node in the method embodiments of FIG. 8, FIG. 9, and FIG. 10. For example, the communication apparatus 140 may be the first IAB node, or may be a chip in the first IAB node. The communication apparatus 140 may include components configured to perform operations performed by the first IAB node in the method embodiments. In addition, the components in the communication apparatus 140 are separately configured to implement the operations performed by the first IAB node in the method embodiments. Details may be as follows.

The first integrated access and backhaul IAB node receives first information from a first donor node, where the first information indicates a slice corresponding to a first backhaul radio link control RLC channel, and the first backhaul RLC channel is a backhaul RLC channel corresponding to the first IAB node.

The first IAB node establishes the first backhaul RLC channel based on the first information.

In the communication apparatus 140 described in FIG. 14, the first information indicates the slice corresponding to the first backhaul RLC channel corresponding to the first IAB node, so that slice resource isolation between a transmit end and a receive end that correspond to the first backhaul RLC channel can be implemented, thereby implementing end-to-end slice resource isolation in an IAB architecture, and ensuring prioritized and reliable communication of a high-priority service.

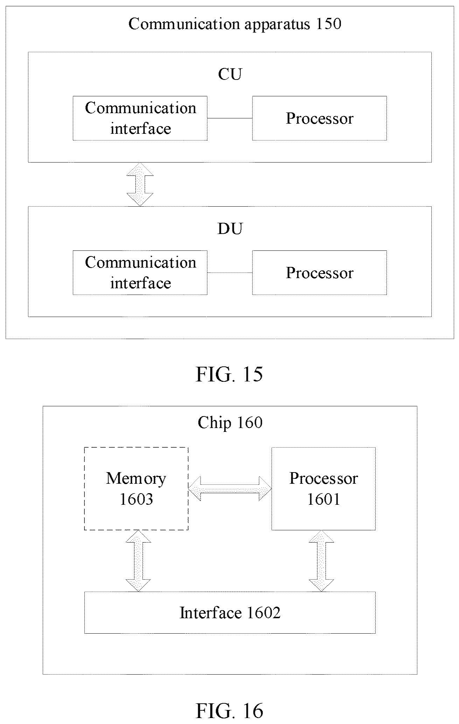

It should be understood that when the communication apparatus 140 is the first donor node, FIG. 15 shows another form of the communication apparatus 140. In FIG. 15, a communication apparatus 150 is a first donor node. It should be understood that the first donor node includes a CU and a DU. The CU may include a communication interface and a processor, and optionally may further include a memory. The communication interface may be configured to communicate with a CU of a donor node or a DU of an IAB node. The DU may also include a communication interface, a processor, a memory, and a bus connecting the communication interface, the processor, and the memory. The communication interface is configured to communicate with an MT of an IAB node.

For a case in which the communication apparatus is a chip or a chip system, refer to a diagram of a structure of a chip shown in FIG. 16.

As shown in FIG. 16, the chip 160 includes a processor 1601 and an interface 1602. There may be one or more processors 1601, and there may be a plurality of interfaces 1602. It should be noted that functions separately corresponding to the processor 1601 and the interface 1602 may be implemented by using a hardware design, may be implemented by using a software design, or may be implemented by using a combination of software and hardware. This is not limited herein.

Optionally, the chip 160 may further include a memory 1603, and the memory 1603 is configured to store necessary program instructions and data.

In this application, the processor 1601 may be configured to invoke, from the memory 1603, an implementation program of the communication method provided in one or more embodiments of this application on one or more devices or nodes in a first donor node and a first IAB node, and execute instructions included in the program. The interface 1602 may be configured to output an execution result of the processor 1601. In this application, the interface 1602 may be specifically configured to output messages or information of the processor 1601.

For the communication method provided in one or more embodiments of this application, refer to the embodiments of FIG. 8, FIG. 9, and FIG. 10. Details are not described herein again.

The processor in this embodiment of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like.

The memory in this embodiment of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

Based on the methods provided in embodiments of this application, an embodiment of this application further provides a computer-readable storage medium. The computer-readable storage medium stores a computer program. When the computer program is run on one or more processors, the methods shown in FIG. 8, FIG. 9, and FIG. 10 may be implemented.

Based on the methods provided in embodiments of this application, an embodiment of this application further provides a computer program product. The computer program product includes a computer program. When the computer program is run on a processor, the methods shown in FIG. 8, FIG. 9, and FIG. 10 may be implemented.

An embodiment of this application further provides a system. The system includes at least one communication apparatus 130, communication apparatus 140, communication apparatus 150, or chip 160, and is configured to perform steps performed by a corresponding device in any one of the embodiments of FIG. 8, FIG. 9, and FIG. 10.

An embodiment of this application further provides a system. The system includes a first donor node and a first IAB node. The first donor node is configured to perform steps performed by the first donor node in any one of the embodiments of FIG. 8, FIG. 9, and FIG. 10. The first IAB node is configured to perform steps performed by the first IAB node in any one of the embodiments of FIG. 8, FIG. 9, and FIG. 10.

An embodiment of this application further provides a processing apparatus. The apparatus includes a processor and an interface. The processor is configured to perform the method in any one of the method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable controller (programmable logic device, PLD) or another integrated chip. The processing apparatus may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any memory of another appropriate type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and steps other than sending and receiving steps may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or various variations of the operations may be further performed. In addition, the steps may be performed in a sequence different from a sequence presented in embodiments of this application, and not all operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the contributing part, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
generating, by a first donor node, first information, wherein the first information indicates a slice corresponding to a first backhaul radio link control RLC channel, and the first backhaul RLC channel is a backhaul RLC channel corresponding to a first integrated access and backhaul IAB node; and
sending, by the first donor node, the first information to the first IAB node.

2. The method according to claim 1, wherein the first information comprises one or more slice identifiers corresponding to the first backhaul RLC channel.

3. The method according to claim 1 or 2, wherein the first information further indicates that a resource used by the first backhaul RLC channel is a reserved resource, the reserved resource comprises a resource reserved for at least one backhaul RLC channel, and the at least one backhaul RLC channel comprises the first backhaul RLC channel.

4. The method according to any one of claims 1 to 3, wherein before sending, by the first donor node, the first information to the first IAB node, the method further comprises:
receiving, by the first donor node, second information from a first node, wherein the second information indicates that a resource used by a first protocol data unit PDU session is a reserved resource, and the first PDU session comprises a PDU session corresponding to the first donor node.

5. The method according to any one of claims 1 to 3, wherein before sending, by the first donor node, the first information to the first IAB node, the method further comprises:
receiving, by the first donor node, third information from a first node, wherein the third information indicates that the first IAB node is a node that provides a service of a first priority.

6. The method according to claim 5, wherein the method further comprises:
receiving, by the first donor node, fourth information from the first IAB node, wherein the fourth information indicates that the first IAB node is a node that provides a service of the first priority.

7. The method according to claim 5 or 6, wherein the method further comprises:
determining, by the first donor node based on the third information, that the first backhaul RLC channel needs to use a reserved resource.

8. The method according to any one of claims 1 to 7, wherein the first information further comprises a slice identifier corresponding to first migration data, the first migration data comprises data transmitted after the first IAB node migrates from a connection with the first donor node to a connection with a second donor node, and the second donor node is different from the first donor node.

9. The method according to claim 8, wherein the first information further indicates a slice corresponding to a second backhaul RLC channel, and the second backhaul RLC channel is a backhaul RLC channel corresponding to the second donor node.

10. The method according to claim 9, wherein when the slice corresponding to the second backhaul RLC channel is different from the slice corresponding to the first backhaul RLC channel, the first information further indicates a mapping relationship between the second backhaul RLC channel and the first backhaul RLC channel.

11. The method according to claim 10, wherein the mapping relationship comprises:
the slice identifier corresponding to the first backhaul RLC channel is the same as or different from a slice identifier corresponding to the second backhaul RLC channel.

12. The method according to claim 10 or 11, wherein the mapping relationship comprises:
a slice/service type SST corresponding to the first backhaul RLC channel is the same as a slice/service type SST corresponding to the second backhaul RLC channel, and a slice differentiator SD corresponding to the first backhaul RLC channel is different from a slice differentiator SD corresponding to the second backhaul RLC channel; or
a slice/service type SST corresponding to the first backhaul RLC channel is different from a slice/service type SST corresponding to the second backhaul RLC channel, and a slice differentiator SD corresponding to the first backhaul RLC channel is the same as a slice differentiator SD corresponding to the second backhaul RLC channel.

13. The method according to any one of claims 1 to 12, wherein the method further comprises:
receiving, by the first donor node, fifth information from the first IAB node, wherein the fifth information indicates slice resource congestion.

14. The method according to any one of claims 1 to 13, wherein a node in a first backhaul adaptation protocol BAP topology supports the slice indicated by the first information, the first BAP topology is managed by the first donor node, and the first IAB node belongs to the first BAP topology.

15. A communication method, comprising:
receiving, by a first integrated access and backhaul IAB node, first information from a first donor node, wherein the first information indicates a slice corresponding to a first backhaul radio link control RLC channel, and the first backhaul RLC channel is a backhaul RLC channel corresponding to the first IAB node; and
establishing, by the first IAB node, the first backhaul RLC channel based on the first information.

16. The method according to claim 15, wherein the first information comprises one or more slice identifiers corresponding to the first backhaul RLC channel.

17. The method according to claim 15 or 16, wherein the first information further indicates that a resource used by the first backhaul RLC channel is a reserved resource, the reserved resource comprises a resource reserved for at least one backhaul RLC channel, and the at least one backhaul RLC channel comprises the first backhaul RLC channel.

18. The method according to any one of claims 15 to 17, wherein before receiving, by the first integrated access and backhaul IAB node, the first information from the first donor node, the method further comprises:
sending, by the first IAB node, fourth information to the first donor node, wherein the fourth information indicates that the first IAB node is a node that provides a service of a first priority.

19. The method according to any one of claims 15 to 18, wherein the first information further comprises a slice identifier corresponding to first migration data, the first migration data comprises data transmitted after the first IAB node migrates from a connection with the first donor node to a connection with a second donor node, and the second donor node is different from the first donor node.

20. The method according to claim 19, wherein the first information further indicates a slice corresponding to a second backhaul RLC channel, and the second backhaul RLC channel is a backhaul RLC channel corresponding to the second donor node.

21. The method according to claim 20, wherein when the slice corresponding to the second backhaul RLC channel is different from the slice corresponding to the first backhaul RLC channel, the first information further indicates a mapping relationship between the second backhaul RLC channel and the first backhaul RLC channel.

22. The method according to claim 21, wherein the mapping relationship comprises:
the slice identifier corresponding to the first backhaul RLC channel is the same as or different from a slice identifier corresponding to the second backhaul RLC channel.

23. The method according to claim 21 or 22, wherein the mapping relationship comprises:
a slice/service type SST corresponding to the first backhaul RLC channel is the same as a slice/service type SST corresponding to the second backhaul RLC channel, and a slice differentiator SD corresponding to the first backhaul RLC channel is different from a slice differentiator SD corresponding to the second backhaul RLC channel; or
a slice/service type SST corresponding to the first backhaul RLC channel is different from a slice/service type SST corresponding to the second backhaul RLC channel, and a slice differentiator SD corresponding to the first backhaul RLC channel is the same as a slice differentiator SD corresponding to the second backhaul RLC channel.

24. The method according to any one of claims 15 to 23, wherein the method further comprises:
sending, by the first IAB node, fifth information to the first donor node, wherein the fifth information indicates slice resource congestion.

25. The method according to any one of claims 15 to 24, wherein a node in a first backhaul adaptation protocol BAP topology supports the slice indicated by the first information, the first BAP topology is managed by the first donor node, and the first IAB node belongs to the first BAP topology.

26. The method according to any one of claims 15 to 25, wherein the method further comprises:
transmitting, by the first IAB node, a first data packet to a second IAB node based on a slice identifier corresponding to the first data packet, wherein the second IAB node is an IAB node that supports a slice corresponding to the first data packet.

27. A communication apparatus, comprising a module or unit configured to perform the method according to any one of claims 1 to 14 or claims 15 to 26.

28. A communication apparatus, comprising a processor, wherein
when the processor invokes a computer program or instructions in a memory, the method according to any one of claims 1 to 14 is performed, or the method according to any one of claims 15 to 26 is performed.

29. A communication apparatus, comprising a logic circuit and an interface, wherein the logic circuit is coupled to the interface; and
the interface is configured to input to-be-processed data; the logic circuit processes the to-be-processed data according to the method according to any one of claims 1 to 14 or claims 15 to 26, to obtain processed data; and the interface is configured to output the processed data.

30. A computer-readable storage medium, wherein
the computer-readable storage medium is configured to store instructions or a computer program; and when the instructions or the computer program is executed, the method according to any one of claims 1 to 14 is implemented, or the method according to any one of claims 15 to 26 is implemented.

31. A computer program product, comprising instructions or a computer program, wherein
when the instructions or the computer program is executed, the method according to any one of claims 1 to 14 is performed, or the method according to any one of claims 15 to 26 is performed.

32. A communication system, comprising the communication apparatus according to claim 27, the communication apparatus according to claim 28, or the communication apparatus according to claim 29.

33. A communication system, comprising a first donor node and a first IAB node, wherein
the first donor node is configured to perform the method according to any one of claims 1 to 14, and the first IAB node is configured to perform the method according to any one of claims 15 to 26.
